# EUROPEAN PATENT APPLICATION

(11) **EP 3 950 599 A1**
(43) Date of publication of application: **09.02.2022**
(21) Application number: 20780056.6
(22) Date of filing: 10.03.2020
(51) Int. Cl.: C01G 53/00, H01M 4/131, H01M 4/505, H01M 4/525

(54) **LITHIUM ION SECONDARY BATTERY POSITIVE ELECTRODE ACTIVE MATERIAL, METHOD FOR MANUFACTURING SAME, AND LITHIUM ION SECONDARY BATTERY**

(30) Priority: 25.03.2019 JP 2019056978
(71) Applicant: Hitachi Metals, Ltd., Minato-ku Tokyo 108-8224 (JP)
(72) Inventor: TOYAMA, Tatsuya, Tokyo 108-8224 (JP); GUNJI, Akira, Tokyo 108-8224 (JP); TOKORO, Hisato, Tokyo 108-8224 (JP); TAKAHASHI, Shin, Tokyo 108-8224 (JP); TAKANO, Shuichi, Tokyo 108-8224 (JP)
(74) Representative: Becker, Eberhard
(86) International application number: PCT/JP2020/010284
(87) International publication number: WO 2020/195790

(57) **Abstract**

[Problem] To provide a lithium ion secondary battery positive electrode active material having a high discharge capacity and excellent rate characteristics and charge/discharge cycle characteristics. [Solution] This positive electrode active material for lithium ion secondary batteries is represented by composition formula (1): Li₁₊ₐNi_{b}Co_{c}M_{d}XₑO_{2+α}(in composition formula (1), M represents at least one selected from Al and Mn, X represents at least one metallic element other than Li, Ni, Co, Al, and Mn, and a, b, c, d, e, and α are numbers satisfying -0.04≤a≤0.08, 0.80≤b<1.0, 0≤c<0.2, 0≤d<0.2, 0<e<0.08, b+c+d+e=1, and -0.2<α<0.2), wherein the positive electrode active material includes secondary particles formed through aggregation of multiple primary particles, and, in the primary particles inside the secondary particles, the atomic concentration D1 of X at a depth of 1 nm from the interface between the primary particles and the atom concentration D2 of X at the central portion of each of the primary particles satisfy D1>D2.

## Description

### [Technical Field]

The present invention relates to a positive electrode active material for lithium ion secondary battery, a method for manufacturing the same, and a lithium ion secondary battery in which the positive electrode active material is used.

### [Background Art]

As lightweight secondary batteries having a high energy density, lithium ion secondary batteries have become widely distributed. Compared with other secondary batteries such as nickel-hydride storage batteries or nickel-cadmium storage batteries, lithium ion secondary batteries have characteristics of a high energy density and a small memory effect. Therefore, the uses of lithium ion secondary batteries are expanding from small electric power sources for mobile electronics, electric power tools, domestic electrical equipment, and the like to medium and large electric power sources such as stationary power sources for electric power storage devices, uninterruptible power source devices, electric power smoothing devices, and the like or driving power sources for ships, railway vehicles, hybrid railway vehicles, hybrid cars, electric cars, and the like.

For lithium ion secondary batteries, in response to the expansion of uses, there is a demand for an additional increase in capacity. In addition, excellent charge/discharge cycle characteristics, output characteristics suitable for uses, and the like are also required. In a variety of uses such as stationary power sources and driving power sources, there is an intense demand for an increase in output, and, regarding uses in cars, output stability is required to enable longer-distance EV travel. There is a desire for output characteristics with which the output is stable throughout discharge and in which high-output operation can be continued irrespective of the state of charge (SOC).

Under such situations, regarding positive electrode active materials having a significant influence on battery characteristics, studies are underway not only to establish high capacity or mass production but also to reduce resistance to lithium ions, stabilize crystal structures, or the like. As positive electrode active materials for lithium ion secondary batteries, lithium transition metal complex oxides having an α-NaFeO₂ type crystal structure (hereinafter, referred to as lamellar structure in some cases) are broadly known. Although, in the related art, LiCoO₂ has been used as an oxide having a lamellar structure, in response to the demand for an increase in capacity, mass production, or the like, development is underway regarding ternary oxides represented by Li(Ni, Co, Mn)O₂, nickel-based oxides in which LiNiO₂ is substituted with a heterogeneous element, or the like.

Among lithium transition metal complex oxides having a lamellar structure, nickel-based oxides have a disadvantage that lifetimes are not favorable at all times. However, nickel-based oxides contain nickel that is inexpensive compared with cobalt or the like, exhibit a relatively high capacity, and are thus expected to be applied for a variety of uses. Particularly, there are rising expectations for chemical compositions having an increased percentage of nickel with respect to metals other than lithium (Ni, Co, Mn, and the like).

For example, Patent Literature 1 describes a lithium transition metal-based compound powder for a lithium secondary battery positive electrode material that is obtained by calcining a fine and homogeneous mixture of main component raw materials including a lithium transition metal-based compound and a compound (additive) made of a metallic element that can be octavalent or hexavalent in terms of the atomic valency and has a continuous composition gradient structure in which an additive element is present with a concentration gradient in the depth direction from the particle surface, specifically, in a depth range of approximately 10 nm.

In addition, Patent Literature 2 describes a lithium ion secondary battery positive electrode material that is represented by

Li₁₊ₐNi_{b}Mn_{c}Co_{ed}TiₑMₑO_{2+α} ··· (1)

(here, in the formula (1), M represents at least one element selected from the group consisting of Mg, Al, Zr, Mo, and Nb, and a, b, c, d, e, f, and a are numbers satisfying -0.1≤a≤0.2, 0.7<b<0.9, 0≤c<0.3, 0≤d<0.3, 0<e≤0.25, 0≤f<0.3, b+c+d+e+f=1, and -0.2≤α≤0.2.) and has an atom ratio of Ti₃₊ to Ti₄₊, Ti₃₊/Ti₄₊ based on X-ray photoelectron spectrometry that is 1.5 or more and 20 or less.

### [Reference List]

### [Patent Literature]

Patent Literature 1: Japanese Patent No. 5428251
Patent Literature 2: Japanese Patent No. 6197981

### [Summary of Invention]

### [Technical Problem]

When the percentage of nickel with respect to metals other than lithium is 70% or more, and the nickel content is high, nickel-based oxides have a poorly stable crystal structure and thus have a shortcoming of making realizing favorable charge/discharge cycle characteristics difficult. Ordinarily, lithium transition metal complex oxides with a high nickel content have a property of having a crystal structure that is likely to become unstable during charging and discharge. In the crystal structure, Ni forms layers formed of MeO₂ (Me represents a metallic element such as Ni). During discharge, lithium ions are intercalated between these layers and occupy lithium sites, and, during discharge, the lithium ions are deintercalated. Lattice distortion or change in the crystal structure caused in association with such intercalation or deintercalation of lithium ions has an influence on charge/discharge cycle characteristics, output characteristics, or the like. Hence, in order to suppress lattice distortion and change in the crystal structure, there is a method of adding a stable additive component that does not contribute to charging and discharge.

In Patent Literature 1 and 2, a concentration gradient or a concentrated surface layer is formed by an additive component on the surface of a Ni-Co-Mn-based positive electrode active material, whereby lattice distortion or change in the crystal structure is suppressed, and certain effects are obtained. However, when the percentage of nickel is increased to 80% or more for the purpose of an increase in capacity, it becomes more difficult to maintain stability. In addition, since stability is maintained with a relatively large amount of cobalt, the productivity, including the raw material costs, is poor. Therefore, there is demand for a high discharge capacity and improvement to having favorable output characteristics (rate characteristics and charge/discharge cycle characteristics) for positive electrode active materials having an increased Ni proportion and a decreased Co proportion.

Therefore, the present invention relates to a positive electrode active material having a high Ni proportion in which the percentage of Ni is set to 80% or more, and an objective of the present invention is to provide a positive electrode active material for lithium ion secondary battery (hereinafter, simply referred to as "positive electrode active material" in some cases) having a high discharge capacity, favorable rate characteristics, and favorable charge/discharge cycle characteristics, and furthermore, a positive electrode active material having the same characteristics even when the Co content is further reduced, a method for manufacturing the same, and a lithium ion secondary battery in which this positive electrode active material is used.

### [Solution to Problem]

A positive electrode active material for lithium ion secondary battery according to the present invention is a positive electrode active material for lithium ion secondary battery containing a lithium transition metal complex oxide represented by a composition formula shown below (1);

Li₁₊ₐNi_{b}Co_{c}M_{d}XₑO_{2+α} ··· (1)

[here, in the composition formula (1), M represents at least one selected from Al and Mn, X represents at least one metallic element other than Li, Ni, Co, Al, and Mn, and a, b, c, d, e, and a are numbers satisfying -0.04≤a≤0.08, 0.80≤b<1.0, 0≤c<0.2, 0≤d<0.2, 0<e<0.08, b+c+d+e=1, and -0.2<α<0.2], the positive electrode active material includes secondary particles formed by aggregation of a plurality of primary particles, and, in the primary particles present inside the secondary particles, an atomic concentration D1 of X at a depth of 1 nm from an interface between the primary particles and an atomic concentration D2 of X at a central part of the primary particle satisfy D1>D2.

A method for manufacturing a positive electrode active material for lithium ion secondary battery according to the present invention is a method for manufacturing a positive electrode active material for lithium ion secondary battery containing a lithium transition metal complex oxide represented by a composition formula described below (1);

Li₁₊ₐNi_{b}Co_{c}M_{d}XₑO_{2+α} ··· (1)

[here, in the composition formula (1), M represents at least one selected from Al and Mn, X represents at least one metallic element other than Li, Ni, Co, Al, and Mn, and a, b, c, d, e, and a are numbers satisfying -0.04≤a≤0.08, 0.80≤b<1.0, 0≤c<0.2, 0≤d<0.2, 0<e<0.08, b+c+d+e=1, and -0.2<α<0.2], the method having a mixing step of mixing a compound containing metallic elements including Li, Ni, Co, M, and X in the composition formula (1) and a dispersant, a granulation step of obtaining a granulated substance from a slurry obtained through the mixing step, and a calcination step of obtaining a lithium transition metal complex oxide represented by the composition formula (1) by calcining the granulated substance, in which the positive electrode active material for lithium ion secondary battery containing the lithium transition metal complex oxide includes secondary particles formed by aggregation of a plurality of primary particles, and, in the primary particles present inside the secondary particles, an atomic concentration D1 of X at a depth of 1 nm from an interface between the primary particles and an atomic concentration D2 of X at a central part of the primary particle satisfy D1>D2.

### [Advantageous Effects of Invention]

According to the present invention, it is possible to provide a positive electrode active material for lithium ion secondary battery having a high discharge capacity, favorable rate characteristics, and favorable charge/discharge cycle characteristics in a positive electrode active material having a high Ni proportion in which the percentage of Ni is set to 80% or more. Particularly, even in a positive electrode active material in which the Ni proportion is set to 80% or more and the Co proportion is set to 6% or less, it is possible for a high discharge capacity, favorable rate characteristics, and favorable charge/discharge cycle characteristics to be exhibited.

### [Brief Description of Drawings]

Fig. 1 is a flowchart showing an example of a method for manufacturing a positive electrode active material of the present invention.
Fig. 2 is a partial cross-sectional view schematically showing an example of a lithium ion secondary battery.
Fig. 3 is a view schematically showing an example of a secondary particle and primary particles in the positive electrode active material of the present invention.
Fig. 4 is a view showing a STEM image of a primary particle and a concentration distribution of each element in a STEM-EELS analysis in Example 1 of the present invention.
Fig. 5 is a view showing a STEM image of a primary particle and a concentration distribution of each element in a STEM-EELS analysis in Example 5 of the present invention.
Fig. 6 is a view showing a STEM image of a primary particle and a concentration distribution of each element in a STEM-EDX analysis in Example 5 of the present invention.

### [Description of Embodiments]

Hereinafter, a positive electrode active material for lithium ion secondary battery according to an embodiment of the present invention and a lithium ion secondary battery in which the positive electrode active material for lithium ion secondary battery is used will be described in detail.

### <Positive electrode active material>

The positive electrode active material according to the present embodiment contains a lithium transition metal complex oxide that has an α-NaFeO₂ type crystal structure exhibiting a lamellar structure and contains lithium and a transition metal. The main component of this positive electrode active material is primary particles of the lithium transition metal complex oxide or secondary particles formed by aggregation of a plurality of the primary particles. In addition, the lithium transition metal complex oxide has a lamellar structure allowing the intercalation and deintercalation of lithium ions in a main phase.

The positive electrode active material according to the present embodiment may contain, in addition to the lithium transition metal complex oxide, which is the main component, inevitable impurities derived from raw materials or a manufacturing process, different components that coat the particles of the lithium transition metal complex oxide, for example, boron components, phosphorus components, sulfur components, fluorine components, organic substances, or the like, different components that are mixed together with the particles of the lithium transition metal complex oxide, and the like.

The lithium transition metal complex oxide according to the present embodiment is represented by the following composition formula (1):

Li₁₊ₐNi_{b}Co_{c}M_{d}XₑO₂₊ₐ ··· (1)

[here, in the composition formula (1), M represents at least one selected from Al and Mn, X represents at least one metallic element other than Li, Ni, Co, Al, and Mn, and a, b, c, d, e, and a are numbers satisfying -0.04≤a≤0.08, 0.80≤b<1.0, 0≤c<0.2, 0≤d<0.2, 0<e<0.08, b+c+d+e=1, and -0.2<α<0.2].

In the lithium transition metal complex oxide represented by the composition formula (1), the percentage of nickel with respect to metals other than lithium is 80% or more. That is, the atom fraction of Ni contained is 80 at% or more with respect to the total number of Ni, Co, M, and X atoms. Since the nickel content is high, the lithium transition metal complex oxide is a nickel-based oxide capable of realizing a high discharge capacity. In addition, since the nickel content is high, the raw material costs are low compared with those of LiCoO₂ or the like, which is excellent in terms of productivity including the raw material costs.

Ordinarily, lithium transition metal complex oxides with a high nickel content have a property that the crystal structure that is likely to become unstable during charging and discharge. In the crystal structure, Ni forms layers formed of MeO₂ (Me represents a metallic element such as Ni). During discharge, lithium ions are intercalated between these layers and occupy lithium sites, and, during discharge, the lithium ions are deintercalated. Since a large amount of nickel is present in transition metal sites in the layers formed of MeO₂, when the valence of nickel changes due to charge compensation in association with the intercalation or deintercalation of lithium ions, large lattice distortion or a large change in the crystal structure is caused. Such lattice distortion or change in the crystal structure caused in association with the intercalation or deintercalation of lithium ions has an influence on discharge capacity characteristics, rate characteristics, and charge/discharge cycle characteristics.

Hence, in order to suppress the above-described lattice distortion or change in the crystal structure, there is a method in which a stable additive element that does not contribute to charging and discharge is added. Patent Literature 1 and 2 are also such examples, and the methods of the related art are only intended to modify the surface of the secondary particle, in other words, the primary particles on the surface that form the secondary particle, and thus there is room for improvement in the primary particles inside that form the secondary particle. Therefore, in the present embodiment, attention has been paid to each primary particle positioned inside the secondary particle, and studies have been additionally made regarding the influence of an additive element.

That is, in the present embodiment, in each primary particle positioned inside the secondary particle (hereinafter, simply referred to as primary particle in some cases), the metallic element X in the composition formula is concentrated to satisfy a relationship of D1>D2 between an atomic concentration D1 of the metallic element X in the vicinity of the surface and an atomic concentration D2 of X at the central part of the same primary particle. Since the atomic concentration of X in the vicinity of the surface of each primary particle is high, lattice distortion or change in the crystal structure in the vicinity of the surface of the primary particle in association with a change in the valence of Ni is reduced. Therefore, it is also possible to further suppress lattice distortion or change in the crystal structure in the secondary particles. A fact that the present inventors found was the finding that favorable rate characteristics and favorable charge/discharge cycle characteristics could be obtained as a result. The definition of the atomic concentration of the X element and the definition of the vicinity of the surface or the central part of the primary particle will be given below.

### (Chemical composition)

Here, the meaning of the chemical composition represented by the composition formula (1) will be described.
a in the composition formula (1) is set to -0.04 or more and 0.08 or less. a represents either excess or deficiency of lithium with respect to a stoichiometric proportion in Li(Ni, Co, M, X)O₂. a is not a value indicating the amount provided at the time of combining raw materials, but is a value indicating the amount in a lithium transition metal complex oxide obtained by calcining the raw materials. In a case where either excess or deficiency of lithium in the composition formula (1) is great, that is, a composition containing an excessively small amount of lithium or a composition containing an excessively large amount of lithium with respect to the total amount of Ni, Co, and M, during calcination, a synthesis reaction does not proceed appropriately, cation mixing, which is the entry of nickel into lithium sites, is likely to occur, and the crystallinity is likely to deteriorate. Particularly, in a case where the percentage of nickel is set to as high as 80% or more, the occurrence of cation mixing or the deterioration of the crystallinity is highly likely to be caused, and the discharge capacity and the charge/discharge cycle characteristics are likely to be impaired. In contrast, when a is within the above-stated numeral range, the likelihood of the occurrence of cation mixing decreases, and it is possible to improve a variety of battery performance characteristics. Therefore, even in a composition with a high nickel content, it is possible to obtain a high discharge capacity, favorable rate characteristics, and favorable charge/discharge cycle characteristics.
a is preferably set to -0.04 or more and 0.04 or less and more preferably set to -0.02 or more and 0.02 or less. When the a is -0.02 or more and 0.02 or less, since either excess or deficiency of lithium with respect to the stoichiometric proportion becomes smaller, during calcination, the synthesis reaction proceeds appropriately, and cation mixing is less likely to occur. Therefore, a lamellar structure having fewer defects is formed, and it is possible to obtain a high discharge capacity, favorable rate characteristics, and favorable charge/discharge cycle characteristics. Furthermore, for the positive electrode active material containing the lithium transition metal complex oxide represented by the composition formula (1) as a main component, the ratio between the atomic concentration (number of moles) of lithium contained in the positive electrode active material and the atomic concentration (number of moles) of the total amount of the metallic elements other than lithium is preferably 0.96 or more and 1.08 or less and more preferably 0.98 or more and 1.02 or less. When a calcination precursor is calcined by a heat treatment, there are cases where a different component enters the calcination precursor, which creates a concern that the reaction proportion during calcination may deviate from the stoichiometric proportion. However, with the above-stated atomic concentration ratio, there is a high likelihood that cation mixing or the deterioration of the crystallinity will be suppressed based on the chemical composition represented by the composition formula (1) during calcination. Therefore, a positive electrode active material with which a variety of battery performance characteristics are able to be improved can be obtained.

The coefficient b of nickel in the composition formula (1) is set to 0.80 or more and less than 1.00. When b is 0.80 or more, it is possible to obtain a higher discharge capacity compared with other nickel-based oxides having a low nickel content, ternary oxides represented by Li(Ni, Co, M)O₂, or the like. In addition, since the amount of transition metals rarer than nickel is decreased, it is possible to reduce the raw material cost.

The coefficient b of nickel may be set to 0.85 or more, may be set to 0.90 or more, and may be set to 0.92 or more. As b increases, there is a tendency that an increasingly higher discharge capacity can be obtained. In addition, the coefficient b of nickel may be set to 0.95 or less, may be set to 0.90 or less, and may be set to 0.85 or less. As b decreases, lattice distortion or change in the crystal structure in association with the intercalation or deintercalation of lithium ions is reduced, and cation mixing, which is the entry of nickel into lithium sites, and the deterioration of the crystallinity are less likely to occur during calcination. Hence, there is a tendency that favorable rate characteristics and favorable charge/discharge cycle characteristics can be obtained.

The coefficient c of cobalt in the composition formula (1) is set to 0 or more and less than 0.2. Cobalt may be actively added or there may be a compositional proportion thereof corresponding to inevitable impurities. When an amount of cobalt is within the above-described range, the crystal structure becomes more stable, and an effect of suppressing cation mixing, which is the entry of nickel into lithium sites, or the like can be obtained. Therefore, it is possible to obtain a high discharge capacity or favorable charge/discharge cycle characteristics. On the other hand, when there is an excess of cobalt, the raw material costs of the positive electrode active material increase. In addition, the percentage of other transition metals such as nickel decreases, and there is a concern that the discharge capacity may become low or the effect of the metallic element represented by M may become small. In contrast, when c is within the above-described numerical range, it is possible to reduce the raw material costs of a lithium transition metal complex oxide exhibiting a high discharge capacity, favorable rate characteristics, and favorable charge/discharge cycle characteristics.

The coefficient c of cobalt may be set to 0.01 or more, may be set to 0.02 or more, may be set to 0.03 or more, and may be set to 0.04 or more. As c increases, the element substitution effect of cobalt can be more effectively obtained, and thus there is a tendency that more favorable charge/discharge cycle characteristics or the like can be obtained. The coefficient c of cobalt may be set to 0.06 or less, may be set to 0.03 or less, and may be set to 0.01 or less. As c decreases, it is possible to increasingly reduce the raw material costs. In the present embodiment, when the coefficient b of nickel is 0.90 or more, it is possible to set the coefficient c of cobalt to 0 or more and 0.03 or less. As the amount of cobalt added increases, the crystal structure becomes more stable, and the effect of suppressing cation mixing, which is the entry of nickel into lithium sites, or the like can be obtained. In contrast, in a case where the coefficient b of nickel is 0.90 or more, the inherent opportunity for the addition of cobalt becomes small, but it is thought that the amount of cobalt necessary can be reduced by an effect of the X element concentrated on the primary particle surfaces stabilizing the crystal structure in the vicinities of the primary particle surfaces.

M in the composition formula (1) is defined as at least one metallic element selected from Al and Mn. It is thought that these elements are capable of being substituted at Ni sites, Al being a main group element and thus being present stably without changing valence during charging and discharge, and Mn being a transition metal, but being present stably while maintaining a valence of +4 during charging and discharge. Therefore, the use of these metallic elements enables an effect of stabilizing the crystal structure during charging and discharge to be obtained.

The coefficient d of M in the composition formula (1) is set to 0 or more and less than 0.2. When there is an excess of the metallic element represented by M, the percentage of the other transition metals such as nickel decreases, and there is a concern that the discharge capacity of the positive electrode active material may become low. In contrast, when d is within the above-described numerical range, there is a tendency that a higher discharge capacity, favorable rate characteristics, and favorable charge/discharge cycle characteristics can be obtained.

The coefficient d of M may be set to 0.01 or more, may be set to 0.03 or more, may be set to 0.05 or more, and may be set to 0.10 or more. As d increases, the element substitution effect of the metallic element represented by M can be more effectively obtained. The coefficient d of M may be set to 0.15 or less, may be set to 0.10 or less, and may be set to 0.05 or less. As d decreases, the percentage of the other transition metals such as nickel increases, and there is a tendency of the discharge capacity or the like becoming higher.

X in the composition formula (1) is defined as at least one metallic element other than Li, Ni, Co, Al, and Mn (hereinafter, referred to as X element or element X in some cases). These elements react with Li to form a concentrated layer after Li and Ni react with each other and begin to form an α-NaFeO₂ type crystal structure exhibiting a lamellar structure. In this case, the X element is present on the primary particle surfaces in the positive electrode active material in a calcination step at a relatively low temperature where the reaction between Li and Ni begins, and, in the subsequent high-temperature calcination step, the X element is likely to form a concentrated layer on the primary particle surfaces. Particularly, when all elements including the X element are mixed together in advance using a solid-phase method and finely ground, it becomes possible to distribute the X element on the primary particle surfaces. The X element is preferably at least one element selected from the group consisting of Ti, Ga, Mg, Zr, and Zn. Among these, at least Ti is more preferably contained. Ti can be tetravalent and thus strongly bonds to O and has a strong effect of stabilizing the crystal structure. In addition, this is because Ti has a relatively small molecular weight and decreases the theoretical capacity of the positive electrode active material to a small extent when added. When a metallic element having such properties is used, it becomes possible to concentrate and distribute the metallic element on the surfaces of the primary particles by selecting appropriate synthesis conditions. Therefore, the use of these metallic elements X enables an effect of suppressing deterioration of the crystal structure in the vicinity of the positive electrode active material surface during charging and discharge to be obtained.

The coefficient e of X in the composition formula (1) is set to more than 0 and less than 0.08. When X is added, the crystal structure in the vicinity of the surface of the positive electrode active material becomes more stable as described above, and it is possible to obtain favorable charge/discharge cycle characteristics. Meanwhile, when there is an excess of X, the percentage of other transition metals such as nickel decreases, and there is a concern that the discharge capacity may become low or the effect of the metallic element represented by M to stabilize the crystal structure may become small to degrade the rate characteristics. In addition, in a case where the X element is Ti or the like that can be tetravalent, the percentage of divalent nickel relatively increases on the primary particle surfaces, and cation mixing is more likely to occur. In contrast, when e is within the above-described numerical range, it is possible to obtain a lithium transition metal complex oxide exhibiting a high discharge capacity, favorable rate characteristics, and favorable charge/discharge cycle characteristics.

The coefficient e of X is preferably set to 0.01 or more and 0.05 or less and more preferably set to 0.01 or more and 0.03 or less. When e is 0.01 or more, the proportion of Ni on the primary particle surfaces becomes low, and change in the crystal structure in the vicinities of the primary particle surfaces is reduced. On the other hand, when e is 0.05 or less, it is possible to maintain a sufficient percentage of other transition metals such as nickel and to obtain a high discharge capacity. Therefore, a lamellar structure having fewer defects is formed, and it is possible to obtain a high discharge capacity, favorable rate characteristics, and favorable charge/discharge cycle characteristics.

a in the composition formula (1) is set to more than -0.2 and less than 0.2. a represents either excess or deficiency of oxygen with respect to a stoichiometric proportion of Li(Ni, Co, M, X)O₂. When a is within the above-described numerical range, the crystal structure has a few defects, and it is possible to obtain a high discharge capacity, favorable rate characteristics, and favorable charge/discharge cycle characteristics due to an appropriate crystal structure. The value of a can be measured by inert gas fusion - infrared absorption spectrometry.

### (Secondary particles)

The average particle diameter of the primary particles in the positive electrode active material is preferably 0.05 µm or more and 2 µm or less. When the average particle diameter of the primary particles in the positive electrode active material is set to 2 µm or less, it is possible to ensure the reaction range of the positive electrode active material, and a high discharge capacity and favorable rate characteristics can be obtained. The average particle diameter of the primary particles in the positive electrode active material is more preferably 1.5 µm or less and still more preferably 1.0 µm or less. In addition, the average particle diameter of the secondary particles in the positive electrode active material is, for example, preferably 3 µm or more and 50 µm or less.

The secondary particles in the positive electrode active material can be produced by granulating primary particles manufactured by a method for manufacturing the positive electrode active material described below by dry-type granulation or wet-type granulation. As granulation means, it is possible to use a granulator, for example, a spray dryer, a dynamic fluidized bed device, or the like.

The BET specific surface area of the lithium transition metal complex oxide represented by the composition formula (1) is preferably 0.1 m²/g or more, more preferably 0.2 m²/g or more, and still more preferably 0.3 m²/g or more. In addition, the BET specific surface area is preferably 1.5 m²/g or less and more preferably 1.2 m²/g or less. When the BET specific surface area is 0.1 m²/g or more, it is possible to obtain a positive electrode having a sufficiently high molding density and a sufficiently high packing ratio of the positive electrode active material. In addition, when the BET specific surface area is 1.5 m²/g or less, breakage, deformation, dropping of particles, or the like is less likely to occur during the press-molding of the lithium transition metal complex oxide or during a volume change accompanied by charging and discharge, and it is possible to prevent a binding agent being suctioned due to fine pores. Therefore, the coatability or adhesiveness of the positive electrode active material becomes favorable, and it is possible to obtain a high discharge capacity, favorable rate characteristics, and favorable charge/discharge cycle characteristics.

### (Primary particles forming secondary particles)

The positive electrode active material of the embodiment of the present invention includes secondary particles formed by the aggregation of a plurality of primary particles of the lithium transition metal complex oxide, and, inside the secondary particle, the plurality of primary particles is adjacent to each other across an interface. Here, not all of the primary particles form an interface therebetween, but the majority of the primary particles form an interface therebetween. In the primary particles inside the secondary particle, the atomic concentration D1 of the X element at a depth of 1 nm from an interface of the primary particle (which may be referred to as the surface of the primary particle) and the atomic concentration D2 of the X element at the central part of the primary particle are made to satisfy D1>D2. Here, the atomic concentrations D1 and D2 of the X element are expressed as (X/(Ni+Co+M+X)) and can be confirmed by EDX or the like. In addition, it is important that primary particles having a concentrated surface refer to primary particles other than the primary particles positioned on the surface of the secondary particle, and it is preferable that the surface-concentrated primary particles are at least 50% or more, preferably 70% or more, and more preferably 100% of the number of the primary particles inside the secondary particle.

Here, concentrated surface layers are present not only on the surface of the secondary particle, but also on several primary particles inside the secondary particle, and it is effective that the X element is concentrated particularly in an extremely thin region that is several nanometers deep from the surface. Ordinarily, it is known that, due to the tunnel effect, even insulating bodies have electron conductivity when the thickness is 10 nm or less. Therefore, it can be said that a charge/discharge reaction proceeds even in insulating bodies as long as the concentrated layer is thinner than 10 nm. In the present embodiment, since an extremely thin concentrated layer that is several nanometers deep is provided in each of the primary particles, charge/discharge reactions between the primary particles uniformly occur, and furthermore, the rate of Ni relatively decreases in spite of the fact that the concentrated layer is extremely thin, which leads to a more stable crystal structure in the vicinity of the surface and the obtainment of favorable charge/discharge cycle characteristics. In order to maintain a high discharge capacity and high rate characteristics, the concentrated layer is preferably as thin as possible. When the thickness is 5 nm or more, there is a concern that the discharge capacity may decrease, and thus the thickness is preferably less than 5 nm and more preferably 3 nm or less.

On the other hand, when the layer in which the X element is concentrated is thicker than 10 nm, the X element-concentrated layer acts as a resistance component, impairs the intercalation and deintercalation of Li, and degrades the rate characteristics. In addition, in the case of being present only on the secondary particle surface, when the X element-concentrated layer comes into contact with an electrolytic solution that has permeated the inside of the secondary particle, the deterioration of the crystal structure begins from the primary particle interfaces, which causes the deterioration of the charge/discharge cycle characteristics. When a state in which the concentration of the X element is high compared with the concentration in the central part of the primary particle is formed in a region that is 10 nm or less deep from the surface of the primary particle, it is possible to suppress the deterioration of the crystal structure and to obtain a high discharge capacity, favorable rate characteristics, and favorable charge/discharge cycle characteristics. Once again, the depth of the X element-concentrated layer is less than 5 nm, preferably 3 nm or less, and more preferably 1 nm or less. In the present invention, as an index indicating that the layer in which the X element is concentrated is present on the surface layer of the primary particle, the concentration D1 of the X element at a depth of 1 nm from the surface of the primary particle is used. In addition, the central part of the primary particle is defined as a range that is, when the average particle diameter of the primary particle is represented by r, as deep as 0.2r or more from the surface of the primary particle toward the central part of the primary particle that has a diameter in a predetermined direction in a range of r±10%.

The atomic concentrations D1 and D2 of the X element preferably satisfy D1>(100 x e)>D2>(100 x e/4). When D1>(100 x e) is satisfied, in the vicinity of the surface of the primary particle, the concentration of the X element is higher than the concentration when the X element is uniformly distributed inside the primary particle, and thus the Ni rate in the vicinity of the surface of the primary particle relatively decreases. Therefore, the crystal structure in the vicinity of the surface becomes more stable, and it is possible to obtain favorable charge/discharge cycle characteristics. Meanwhile, when (100 x e)>D2 is satisfied, in the central part of the primary particle, the concentration of the X element is lower than the concentration when the X element is uniformly distributed inside the primary particle, and thus it is thought that the X element forms a concentrated layer in a part other than the central part, for example, in the vicinity of the surface. In addition, when D2>(100 x e/4) is satisfied, the X element diffuses not only into the vicinity of the surface but also into the central part of the primary particle and is present therein, and thus the expansion and contraction of the crystal structure accompanied by the intercalation and deintercalation of Li during a charge/discharge cycle does not significantly differ between the vicinity of the surface and the central part, and it is possible to obtain favorable charge/discharge cycle characteristics.

In addition, the atomic concentrations D1 and D2 of the X element preferably satisfy that D1 is 1.5 times or more D2. When D1 is 1.5 times or more D2, a state in which the X element is sufficiently concentrated in the vicinity of the surface of the primary particle is formed, and the Ni rate in the vicinity of the surface of the primary particle relatively decreases. Therefore, the crystal structure in the vicinity of the surface becomes more stable, and it is possible to obtain favorable charge/discharge cycle characteristics. In addition, D1 is preferably 20 times or less D2. When the difference between D1 and D2 is too large, relatively, for at least Ni and Co, large concentration differences are generated between the vicinity of the surface of the primary particle and the central part of the primary particle. Therefore, the intercalation and deintercalation reaction of Li becomes uneven, and thus there is a concern that the discharge capacity may become small or the rate characteristics may deteriorate.

In addition, the concentration differences of at least Ni and Co between the vicinity of the surface of the primary particle and the central part of the primary particle are small, respectively, compared with the concentration difference of the X element. When the concentration differences of at least Ni and Co between the vicinity of the surface of the primary particle and the central part of the primary particle are small, respectively, compared with the X element, there is no case where the expansion and contraction of the crystal structure accompanied by the intercalation and deintercalation of Li significantly differs between the vicinity of the surface and the central part. Therefore, favorable charge/discharge cycle characteristics can be obtained. When an M element is added later instead of being mixed and ground together with Li, Ni, and Co, similar to the X element, a state in which the M element is sufficiently concentrated in the vicinity of the surface of the primary particle is formed, and the Ni rate in the vicinity of the surface of the primary particle relatively decreases. Therefore, the crystal structure in the vicinity of the surface becomes more stable, and it is possible to obtain favorable charge/discharge cycle characteristics. Therefore, the M element may be concentrated in the vicinity of the surface of the primary particle.

In the primary particles inside the secondary particle, the atomic concentration D0 (at%) of the X element at the interface of the primary particle (which may be referred to as the surface of the primary particle) preferably satisfies D0>D1>D2. When D0>D1 is satisfied, the primary particle surface is physically protected, and the deterioration of the crystal structure at the primary particle interface due to the electrolytic solution that has permeated the inside of the secondary particle is suppressed, which leads to the obtainment of favorable charge/discharge cycle characteristics. In addition, the atomic concentrations D1 and D0 of the X element preferably satisfy that D0 is less than 10 times D1 and more preferably satisfy that D0 is less than eight times D1. When D0 is less than 10 times D1, there is no increase in resistance due to a layer containing the X element at the primary particle interface, and it is possible to obtain favorable rate characteristics.

In the lithium transition metal complex oxide represented by the composition formula (1), the site occupancy of nickel at 3a sites in the crystal structure belonging to a space group R3-m is preferably less than 4%. The ion radius of divalent nickel is similar to the ion radius of monovalent lithium, and, in ordinary ternary or nickel-based oxides, cation mixing, which is the substitution of lithium at the 3a sites with nickel, is likely to occur. When the site occupancy of nickel at the 3a sites becomes 4% or more, the amount of lithium intercalated into and deintercalated from the 3 a sites decreases, and it becomes difficult to obtain a high discharge capacity. In addition, usually, the percentage of divalent nickel that occupies 3b sites decreases, the lattice constant of the a axis does not become large, and lattice distortion or change in the crystal structure is likely to become large. In contrast, when the site occupancy of nickel at the 3a sites is less than 4%, lattice distortion or change in the crystal structure becomes small, and a high discharge capacity and favorable rate characteristics or charge/discharge cycle characteristics can be obtained. In positive electrode active material for lithium ion secondary battery in which, in the primary particles present inside the secondary particles, the atomic concentration D1 of X at a depth of 1 nm from an interface between the primary particles and the atomic concentration D2 of X at the central part of the primary particle satisfy D1>D2, since the percentage of nickel on the primary particle surface relatively decreases, cation mixing, which is the substitution of lithium with nickel, is less likely to occur.

The occupancy of nickel at the 3a sites can be obtained by performing a crystal structure analysis in a crystal structure model of the space group R3-m by the Rietveld method on an X-ray diffraction spectrum obtained by powder X-ray diffraction measurement using CuKa rays and calculating the percentage of 3a sites occupied by nickel in all 3a sites. In the crystal structure analysis, an attempt is made to make the crystal structure precise under the assumption that 3a sites are occupied by Li or Ni, 3b sites are occupied by Li, Ni, Co, or M, and 6c sites are occupied by O, respectively.

The average composition of the particles of the positive electrode active material can be confirmed by inductively coupled plasma (ICP), atomic absorption spectrometry (AAS), or the like. As the average particle diameter of the primary particles in the positive electrode active material, the following average value was used. A straight line was drawn in a predetermined direction on a secondary particle using a scanning electron microscope (SEM) to obtain the diameter, the diameters of primary particles included in the straight line were calculated by dividing the diameter of the secondary particle by the number of the primary particles, and the average value was obtained from 10 secondary particles. The average particle diameter of the secondary particles in the positive electrode active material can be measured with, for example, a laser diffraction-type particle size distribution measuring instrument or the like. The BET specific surface area can be calculated by the gas adsorption method using an automatic specific surface area measuring instrument. Regarding the atomic concentration of the X element in the primary particle in the positive electrode active material, it is possible to confirm the concentration distribution in the depth direction from the primary particle surface inside the secondary particle by a line analysis of electron energy-loss spectroscopy (EELS) with a scanning transmission electron microscopy (STEM) using the positive electrode active material having a processed cross section. Furthermore, it is possible to quantitatively analyze the concentration of each element of Ni, Co, M, and X using energy dispersive X-ray spectrometry (EDX). In an EDX analysis, the analysis condition such as the instrument performance or the beam current is appropriately selected, whereby it is possible to satisfy both a space resolution of 0.2 nm or less and an analytical precision of 0.1 at%, and an analysis can be made at 1 nm intervals.

### <Method for manufacturing positive electrode active material>

The positive electrode active material according to the present embodiment can be manufactured by reliably progressing a synthesis reaction between lithium and nickel, cobalt, or the like at a raw material ratio at which the lithium transition metal complex oxide becomes a chemical composition represented by the composition formula (1) under appropriate calcination conditions. As the method for manufacturing a positive electrode active material according to the embodiment of the present invention, used is a solid-phase method, which will be described below.

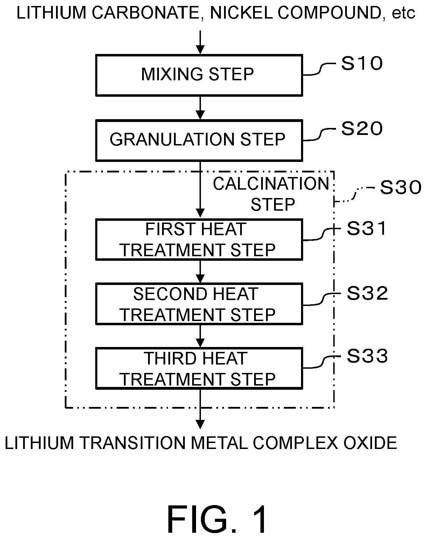

Fig. 1 is a flowchart of a method for manufacturing a positive electrode active material for lithium ion secondary battery according to an embodiment of the present invention.

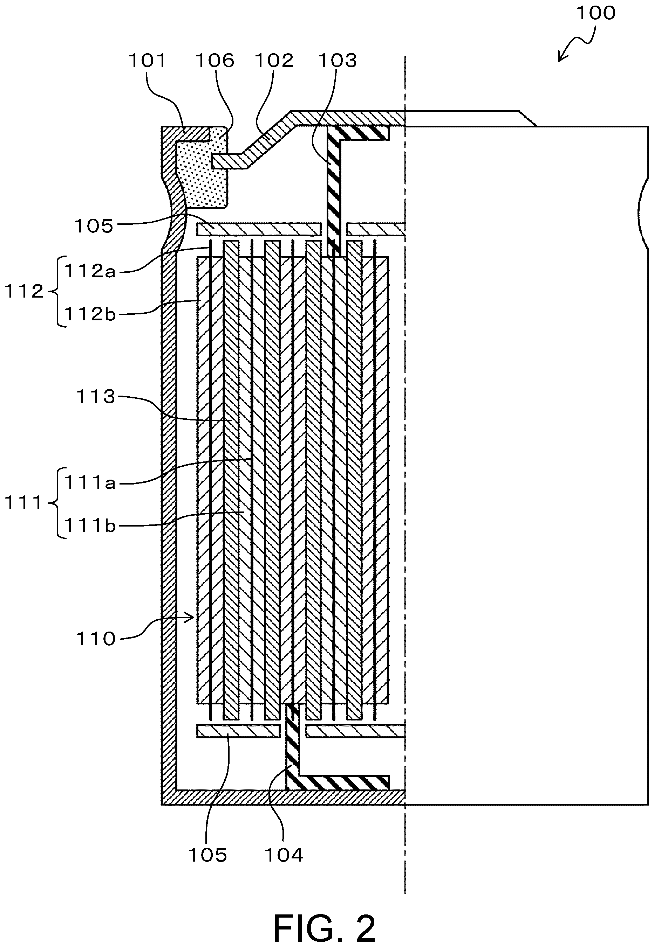

As shown in Fig. 1, the method for manufacturing a positive electrode active material for lithium ion secondary battery according to the present embodiment includes a mixing step S10, a granulation step S20, and a calcination step S30 in this order. Steps other than the above-described steps may be added. For example, in a case where a large amount of lithium carbonate remains in the positive electrode active material obtained in the calcination step S30, since a slurry-form electrode blend gels in a blend coating step for producing a positive electrode 111 shown in Fig. 2, it is possible to reduce the remaining lithium carbonate by adding a water washing step and a drying step subsequent to the calcination step S30. In the case of adding the water washing step and the drying step, a positive electrode active material obtained after the water washing and drying steps is made to satisfy the composition formula (1). In the case of finishing the manufacturing method with the calcination step, a positive electrode active material obtained after the calcination step is made to satisfy the composition formula (1). This is because, regarding a, the value from the positive electrode active material in a state of being used in a battery is important. In addition, the characteristics of the present invention are maintained even after the positive electrode active material is combined into a battery and charged and discharged; however, regarding the amount of Li, it is thought that Li is removed and the value of a changes up to approximately -0.99 to 0.

In the mixing step S10, a compound containing lithium and a compound containing the metallic elements other than Li in the composition formula (1) are mixed together. For example, raw materials thereof are weighed out, respectively, ground, and mixed together, whereby it is possible to obtain a powder-form mixture in which the raw materials are uniformly mixed together. As a grinder that grinds the raw materials, it is possible to use an ordinary precise grinder, for example, a ball mill, a jet mill, a rod mill, a sand mill, or the like. The grinding of the raw materials may be dry-type grinding or wet-type grinding. A slurry containing the raw materials and a solvent such as water may be produced by adding the solvent to the raw materials after dry-type grinding or a slurry produced in advance by adding a solvent such as water to the raw materials may be ground in a wet manner. From the viewpoint of obtaining uniform and fine powder having an average grain size of 0.3 µm or less, wet-type grinding using a solvent such as water is more preferred.

In the present embodiment, in order to concentrate the X element in the vicinities of the surfaces of the primary particles, not a coprecipitation method in which the raw materials are dissolved and precipitated in a solvent but a solid-phase method in which the raw materials are ground and mixed together is used, and it is important to grind the raw material of the X element together with the other raw materials in the step of mixing the raw materials and to mix the raw materials together to produce uniform and fine powder having an average grain size of 0.3 µm or less, preferably, 0.1 µm or more and 0.3 µm or less. Furthermore, it becomes important to uniformly disperse the raw materials. For example, in wet-type mixing, it is preferable to improve the dispersibility of the raw materials in the slurry using a dispersant. When the dispersibility of the raw materials improves, the thicknesses of the X element-concentrated layers become uniform, which is preferable. As the dispersant, it is possible to use a polycarboxylate-based dispersant, an urethane-based dispersant, or an acrylic resin-based dispersant, and an acrylic resin-based dispersant is preferred. The amount of the dispersant added can be arbitrarily added in order to adjust the viscosity of the slurry.

In the present embodiment, as described above, uniform and fine powder having an average grain size of the raw materials of 0.3 µm or less, preferably, 0.1 µm or more and 0.3 µm or less is produced, and furthermore, the raw materials are uniformly dispersed. Therefore, the raw materials are finely ground to be smaller than a level of several hundred nanometers to several micrometers, which are the primary particles in the positive electrode active material. Therefore, it is possible for the individual primary particles to uniformly generate crystal nuclei from these raw materials and for crystals to grow. In the process of the generation of crystal nuclei and the crystal growth reaction, Li and Ni react with each other at a relatively low temperature, and an α-NaFeO₂ type crystal structure exhibiting a lamellar structure begins to be formed as the primary particles. In addition, after that, the X element reacts with Li to form the concentrated layers of the primary particles. The dispersibilty of the X element at this time is important, the X element can be finely and uniformly dispersed using a dispersant, and it is possible to realize the concentrated layers in an extremely thin and uniform thickness that is several nanometers deep from the primary particle surface.

Examples of the compound containing lithium include lithium carbonate, lithium acetate, lithium nitrate, lithium hydroxide, lithium chloride, lithium sulfate, and the like. As shown in Fig. 1, at least lithium carbonate is preferably used, and lithium carbonate is more preferably uses in a percentage of 80% by mass or more in the raw material containing lithium. Compared with other compounds containing lithium, lithium carbonate has excellent supply stability and is inexpensive and thus can be easily procured. In addition, lithium carbonate is weakly alkaline and thus damages manufacturing devices only to a small extent and is excellent in terms of industrial availability and practicality.

As the compound containing the metallic elements other than Li, a compound containing nickel, a compound containing cobalt, a compound containing a metallic element represented by M, and a compound containing a metallic element represented by X are mixed together depending on the composition of the lithium transition metal complex oxide. As the compound containing the metallic elements other than Li, a compound containing C, H, O, and N such as a carbonate, a hydroxide, an oxyhydroxide, an acetate, a citrate, and an oxide is preferably used. From the viewpoint of easiness in grinding or the amount of gas emitted by thermal decomposition, a carbonate, a hydroxide, or an oxide is particularly preferred.

In the mixing step S10, it is preferable to mix the raw materials such that a calcination precursor that is subjected to the calcination step S30 becomes a chemical composition represented by the composition formula (1). Specifically, the atomic concentration ratio (mole ratio) between the atomic concentration (number of moles) of lithium contained in the calcination precursor and the total atomic concentration (number of moles) of the metallic elements other than lithium contained in the calcination precursor is preferably adjusted to be 0.96 or more and 1.08 or less and more preferably adjusted to be 0.96 or more and 1.04 or less. When the atomic concentration ratio is less than 0.96, since lithium lacks, there is a high likelihood that it may not be possible to calcinate an appropriate main phase containing a small amount of a different phase. On the other hand, when the atomic concentration ratio is more than 1.08, the synthesis reaction does not appropriately proceed, and there is a concern that the crystallinity of the lamellar structure may become low.

In order to obtain a lithium transition metal complex oxide in which the percentage of divalent nickel that occupies transition metal sites is high and lattice distortion or change in the crystal structure in association with the intercalation or deintercalation of lithium ions is reduced, it is necessary to sufficiently suppress cation mixing during which divalent nickel is likely to be generated. From the viewpoint of sufficiently suppressing cation mixing during calcination, it is necessary to reliably progress the synthesis reaction between lithium and nickel or the like, and thus it is desirable to react lithium and nickel or the like at a ratio of approximately 1:1 as in the stoichiometric proportion.

Therefore, it is preferable to adjust the atomic concentration ratio of these elements in advance in the stage of the mixing step S10 in which precision grinding and mixing can be performed. In the case of adjusting the atomic concentration ratio in advance, the atomic concentration ratio (mole ratio) between the atomic concentration (number of moles) of lithium contained in the calcination precursor and the total atomic concentration (number of moles) of the metallic elements other than lithium is more preferably 0.98 or more and 1.02 or less. Here, there is a likelihood that, during calcination, lithium contained in the calcination precursor may react with a container for calcination or volatilize. In consideration of the fact that a part of lithium is consumed due to the reaction with the container for calcination or volatilization during calcination, lithium may be excessively added at the time of preparation.

In order to obtain a lithium transition metal complex oxide in which the percentage of divalent nickel that occupies transition metal sites is high and lattice distortion or change in the crystal structure in association with the intercalation or deintercalation of lithium ions is reduced, it is preferable to prevent the entry of metallic elements other than lithium, for example, inevitable impurities derived from the manufacturing process, a different component that coats the particles of the lithium transition metal complex oxide, a different component that is mixed with the particles of the lithium transition metal complex oxide, or the like from after the mixing step S10 and before the calcination step S30.

In the granulation step S20, the mixture obtained in the mixing step S10 is granulated to obtain secondary particles (granulated substances) formed by the aggregation of the particles. For the granulation of the mixture, any of dry-type granulation and wet-type granulation may be used. For the granulation of the mixture, it is possible to use an appropriate granulation method, for example, a dynamic granulation method, a fluidized bed granulation method, a compression granulation method, a spray granulation method, or the like.

As the granulation method that granulates the mixture, a spray granulation method is particularly preferred. As the spray granulator, it is possible to use a variety of types such as two-fluid nozzle type, four-fluid nozzle type, disc type, and the like. In the case of the spray granulation method, it is possible to dry and granulate the slurry that has been precisely mixed and ground by wet-type grinding. In addition, it is possible to precisely control the particle diameters of the secondary particles in a predetermined range by adjusting the concentration of the slurry, the spray pressure, the rotation speed of a disc, and the like, and it is possible to efficiently obtain granulated substances that are almost truly spherical and uniform in chemical composition. In the granulation step S20, the mixture obtained in the mixing step S10 is preferably granulated such that the average grain size (D₅₀) reaches 3 µm or more and 50 µm or less. In the present embodiment, the average grain size (D₅₀) of the secondary particles in a more preferable granulated substance is 5 µm or more and 20 µm or less.

In the calcination step S30, the granulated substances granulated in the granulation step S20 are heat treated to calcinate the lithium transition metal complex oxide represented by the composition formula (1). The calcination step S30 may be performed by one stage of heat treatment in which the heat treatment temperature is controlled in a certain range or may be performed by a plurality of stages of heat treatment in which the heat treatment temperature is controlled in different ranges. However, from the viewpoint of obtaining a lithium transition metal complex oxide including highly pure crystals and exhibiting a high discharge capacity and favorable rate characteristics or charge/discharge cycle characteristics, a first heat treatment step S31, a second heat treatment step S32, and a third heat treatment step S33 are preferably included as shown in Fig. 1, and, particularly, it is important to satisfy the conditions of the second heat treatment step S32 and the third heat treatment step S33.

In the first heat treatment step S31, the granulated substances granulated in the granulation step S20 are heat treated at a heat treatment temperature of 200°C or higher and lower than 600°C for 0.5 hours or longer and five hours or shorter to obtain a first precursor. The first heat treatment step S31 is mainly intended to remove moisture or the like that hinders the synthesis reaction of the lithium transition metal complex oxide from the calcination precursor (the granulated substances granulated in the granulation step S20).

In the first heat treatment step S31, when the heat treatment temperature is 200°C or higher, a combustion reaction of an impurity, the thermal decomposition of the raw materials, or the like sufficiently proceeds, and thus it is possible to suppress the formation of a different phase that is inactive in the subsequent heat treatments, a deposit, or the like. In addition, when the heat treatment temperature is lower than 600°C, the crystals of the lithium transition metal complex oxide are rarely completed in this step, and thus it is possible to prevent a crystal phase having a low purity from remaining in the presence of moisture, an impurity, or the like.

The heat treatment temperature in the first heat treatment step S31 is preferably 250°C or higher and 550°C or lower and more preferably 300°C or higher and 500°C or lower. When the heat treatment temperature is within this range, moisture, an impurity, or the like is efficiently removed, and it is possible to reliably prevent the completion of the crystals of the lithium transition metal complex oxide in this step. The heat treatment time in the first heat treatment step S31 can be set to an appropriate time depending on, for example, the heat treatment temperature, the amount of moisture, an impurity, or the like contained in the mixture, the purpose of the removal of moisture, an impurity, or the like, the target degree of crystallization, or the like.

The first heat treatment step S31 is preferably performed under the stream of an atmospheric gas or under the evacuation of air with a pump. When the heat treatment is performed under the above-described atmosphere, it is possible to efficiently exclude gas that is contained in moisture, an impurity, or the like from the reaction field. The flow rate of the stream of an atmospheric gas or the amount of air evacuated per time with the pump is preferably greater than the volume of gas generated from the calcination precursor. The volume of the gas generated from the calcination precursor can be obtained based on, for example, the amount of the raw materials used, the mole ratio of a component that gasifies by combustion or thermal decomposition per raw materials, or the like.

The first heat treatment step S31 may be performed under an oxidative gas atmosphere, may be performed under a non-oxidative gas atmosphere, or may be performed under a reduced-pressure atmosphere. The oxidative gas atmosphere may be any of an oxygen gas atmosphere and the atmospheric atmosphere. In addition, the reduced-pressure atmosphere may be an appropriate pressure reduction condition of the degree of vacuum, for example, at the atmospheric pressure or lower.

In the second heat treatment step S32, the first precursor obtained in the first heat treatment step S31 is heat treated at a heat treatment temperature of 600°C or higher and lower than 750°C for two hours or longer and five hours or shorter to obtain a second precursor. The second heat treatment step S32 is mainly intended to remove a carbonate component by a reaction between lithium carbonate and a nickel compound or the like and to generate the crystals of the lithium transition metal complex oxide. Nickel in the calcination precursor is sufficiently oxidized, thereby suppressing cation mixing during which nickel enters lithium sites and suppressing the generation of a cubic domain by nickel. In addition, in order to reduce lattice distortion or change in the crystal structure in association with the intercalation or deintercalation of lithium ions, the metallic element represented by M is sufficiently oxidized to increase the uniformity of the composition of a layer formed of MeO₂ and to increase the percentage of divalent nickel having a large ion radius.

In the second heat treatment step S32, unreacted lithium carbonate that remains in the second precursor is preferably reduced to 0.3% by mass or more and 3% by mass or less and more preferably reduced to 0.3% by mass or more and 2% by mass or less per the total mass of the injected first precursor. When the residual amount of lithium carbonate that remains in the second precursor is too large, in the third heat treatment step S33, there is a likelihood that lithium carbonate may melt and form a liquid phase. When the lithium transition metal complex oxide is calcinated in a liquid phase, a state in which the primary particles having a lamellar structure are excessively oriented is formed due to excessive sintering or the specific surface area decreases. As a result, there is a concern that the discharge capacity, the rate characteristics, or the like may deteriorate. Furthermore, the X element permeates up to the insides of the primary particles, and it becomes impossible to obtain the X element-concentrated layers in the vicinities of the primary particle surfaces. In addition, when the residual amount of lithium carbonate that remains in the second precursor is too small, the specific surface area of the lithium transition metal complex oxide to be calcinated becomes excessive, the contact area with the electrolytic solution increases, and the X element does not concentrate in the vicinities of the primary particle surfaces, and thus there is a concern that the charge/discharge cycle characteristics may deteriorate. In contrast, when the residual amount of the unreacted lithium carbonate is within the above-described range, it is possible to obtain a high discharge capacity, favorable rate characteristics, and favorable charge/discharge cycle characteristics.

In addition, in the second heat treatment step S32, when the reaction of lithium carbonate is not sufficient, and a large amount of lithium carbonate remains, in the third heat treatment step S33, there is a concern that lithium carbonate may melt and form a liquid phase. When the lithium transition metal complex oxide is calcinated in a liquid phase, the crystal grains are likely to coarsen, and thus there is a concern that the output characteristics may deteriorate. In contrast, when the majority of lithium carbonate is reacted in the second heat treatment step S32, the generation of a liquid phase becomes difficult in the third heat treatment step S33, and thus the crystal grains are less likely to coarsen even when the heat treatment temperature is increased. Therefore, it becomes possible to calcinate the lithium transition metal complex oxide including highly pure crystals at a high temperature while suppressing the coarsening of the crystal grains.

In addition, in the second heat treatment step S32, when the reaction of lithium carbonate is not sufficient, and a large amount of lithium carbonate remains, it becomes difficult for oxygen to move to the precursor. When oxygen does not move to the second precursor in the third heat treatment step S33, since nickel is not sufficiently oxidized, cation mixing by divalent nickel is less likely to occur. In contrast, when the majority of lithium carbonate is reacted in the second heat treatment step S32, it becomes easy for oxygen to move to the second precursor which has a powder form. Therefore, it is possible to sufficiently oxidize manganese or the like to increase the percentage of divalent nickel in the layer formed of MeO₂ and to suppress the excessive remaining of divalent nickel that is highly likely to cause cation mixing.

In the second heat treatment step S32, when the heat treatment temperature is 600°C or higher, since crystals are generated by a reaction between lithium carbonate and the nickel compound or the like, it is possible to avoid the remaining of a large amount of unreacted lithium carbonate. Therefore, it becomes difficult for lithium carbonate to form a liquid phase in the subsequent heat treatment, and the coarsening of the crystal grains is suppressed. Hence, favorable output characteristics and the like can be obtained, it becomes easy for oxygen to move to the second precursor, and cation mixing is likely to be suppressed. In addition, when the heat treatment temperature is lower than 750°C, in the second heat treatment step S32, the grains do not excessively grow, and manganese or the like is sufficiently oxidized, whereby it is possible to increase the uniformity of the composition of the layer formed of MeO₂.

The heat treatment temperature in the second heat treatment step S32 is preferably 650°C or higher and more preferably 680°C or higher. As the heat treatment temperature increases as described above, the synthesis reaction is further accelerated, and the remaining of lithium carbonate is more reliably prevented. Furthermore, when the heat treatment temperature is 700°C or higher, it is possible to increase the uniformity of the composition of the layer formed of MeO₂, and it becomes easy to diffuse the X element into the primary particle surfaces. Therefore, in order to form the X element-concentrated layers in the vicinities of the surfaces of the primary particles, the heat treatment temperature is more preferably a relatively high temperature of approximately 700°C.

The heat treatment temperature in the second heat treatment step S32 is preferably lower than 750°C. When the heat treatment temperature is higher than 750°C, unreacted lithium carbonate in the first heat treatment step S31 forms a liquid phase, and the crystal grains coarsen. In addition, the element X diffuses not only into the primary particle interfaces, but also into the insides of the primary particles, which makes it difficult to form the concentrated layers in the vicinities of the interfaces.

The heat treatment time in the second heat treatment step S32 is preferably set to four hours or longer. In addition, the heat treatment time is preferably set to 15 hours or shorter. When the heat treatment time is within this range, since the reaction of lithium carbonate sufficiently proceeds, it is possible to reliably remove the carbonate component. In addition, the necessary time for the heat treatment is shortened, and the productivity of the lithium transition metal complex oxide improves.

The second heat treatment step S32 is preferably performed under an oxidative atmosphere. The oxygen concentration in the atmosphere is preferably set to 50% or more, more preferably 60% or more, and still more preferably 80% or more. In addition, in the case of a positive electrode active material having a high Ni rate in which the percentage of Ni is set to 80% or more, in an atmosphere having a high carbon dioxide concentration, Li in the positive electrode active material reacts with carbon dioxide to form lithium carbonate. When Li is pulled out from the positive electrode active material in order to form lithium carbonate, the crystallinity degrades, which causes a decrease in the discharge capacity or the deterioration of the charge/discharge cycle characteristics. Therefore, the carbon dioxide concentration in the atmosphere is preferably set to 5% or less and more preferably set to 1% or less. In addition, the second heat treatment step S32 is preferably performed under the stream of an atmospheric gas. When the heat treatment is performed under the stream of an atmospheric gas, it is possible to reliably oxidize nickel and to reliably exclude carbon dioxide emitted into the atmosphere.

In the third heat treatment step S33, the second precursor obtained in the second heat treatment step S32 is heat treated at a heat treatment temperature of 750°C or higher and 900°C or lower for two hours or longer and 50 hours or shorter to obtain the lithium transition metal complex oxide. The third heat treatment step S33 is mainly intended to grow the crystal grains of the lithium transition metal complex oxide having a lamellar structure up to an appropriate grain size or specific surface area.

In the third heat treatment step S33, when the heat treatment temperature is 750°C or higher, nickel is sufficiently oxidized, whereby it is possible to suppress cation mixing and to grow the crystal grains of the lithium transition metal complex oxide up to an appropriate grain size or specific surface area. In addition, the metallic element represented by M is sufficiently oxidized, whereby it is possible to increase the percentage of divalent nickel. Since a main phase in which the lattice constant of the a axis is large and lattice distortion or change in the crystal structure in association with the intercalation or deintercalation of lithium ions is reduced is formed, it is possible to obtain a high discharge capacity and favorable charge/discharge cycle characteristics and output characteristics. In addition, when the heat treatment temperature is 900°C or lower, since lithium is less likely to volatilize, and it is difficult to decompose the lamellar structure, it is possible to obtain a lithium transition metal complex oxide including highly pure crystals and having a high discharge capacity and favorable rate characteristics or the like.

The heat treatment temperature in the third heat treatment step S33 is preferably 780°C or higher, more preferably 800°C or higher, and still more preferably 820°C or higher. As the heat treatment temperature increases as described above, it is possible to sufficiently oxidize nickel or the metallic element represented by M and to accelerate the grain growth of the lithium transition metal complex oxide.

The heat treatment temperature in the third heat treatment step S33 is preferably 880°C or lower and more preferably 860°C or lower. As the heat treatment temperature decreases as described above, since lithium is far less likely to volatilize, it is possible to obtain a lithium transition metal complex oxide having a favorable discharge capacity and favorable rate characteristics or the like by reliably preventing the decomposition of the lithium transition metal complex oxide.

The heat treatment time in the third heat treatment step S33 is preferably set to 0.5 hours or longer. In addition, the heat treatment time is preferably set to 15 hours or shorter. When the heat treatment time is within this range, it is possible to obtain a lithium transition metal complex oxide in which nickel or the like is sufficiently oxidized and thus lattice distortion or change in the crystal structure in association with the intercalation or deintercalation of lithium ions is reduced. In addition, since the necessary time for the heat treatment is shortened, it is possible to improve the productivity of the lithium transition metal complex oxide.

The third heat treatment step S33 is preferably performed under an oxidative atmosphere. The oxygen concentration in the atmosphere is preferably set to 80% or more, more preferably 90% or more, and still more preferably 95% or more. In addition, the carbon dioxide concentration in the atmosphere is preferably set to 2% or less and more preferably set to 0.5% or less. In the third heat treatment step, since the second precursor that has undergone the second heat treatment step is used, the amount of the carbonate component contained in the precursor is small, and it becomes possible to heat treat the precursor in an atmosphere having a lower carbon dioxide concentration than that in the second heat treatment step. Therefore, compared with the second precursor, the lithium transition metal complex oxide after the third heat treatment step is in a more highly crystalline state. In addition, the third heat treatment step S33 is preferably performed under the stream of an atmospheric gas. When the heat treatment is performed under the stream of an atmospheric gas, it is possible to reliably oxidize nickel or the like and to reliably exclude carbon dioxide emitted into the atmosphere.

In the calcination step S20, as means for the heat treatments, it is possible to use an appropriate heat treatment device such as a rotary furnace such as a rotary kiln, a continuous furnace such as a roller hearth kiln, a tunnel furnace, or a pusher furnace, or a batch furnace. The first heat treatment step S31, the second heat treatment step S32, and the third heat treatment step S33 may be performed, respectively, using the same heat treatment device or using mutually different heat treatment devices. In addition, the respective heat treatment steps may be intermittently performed under switched atmospheres and may be continuously performed in the case of performing the heat treatments while evacuating the gas in the atmosphere. Since the first heat treatment step S31 is mainly intended to remove moisture or the like, in a case where there is no need for dehydrating moisture derived from the raw materials such as a case where not hydroxides but oxides are used as the raw materials, the first heat treatment step S31 may be skipped to perform the calcination step from the second heat treatment step S32. When the unreacted lithium carbonate that remains in the second precursor is reduced to 0.3% by mass or more and 2% by mass or less per the total mass of the injected first precursor, and the second precursor is calcinated in the third heat treatment step S33 under an atmosphere having a lower carbon dioxide concentration, it is possible to obtain the positive electrode active material of the present invention in which the element X is concentrated in the vicinities of the primary particle interfaces and cation mixing is sufficiently reduced to exhibit a high discharge capacity and favorable charge/discharge cycle characteristics.

With the mixing step S10, the granulation step S20, and the calcination step S30 described above, it is possible to manufacture the positive electrode active material formed of the lithium transition metal complex oxide represented by the composition formula (1). The distribution of the element X, the amount of cation mixing, or the specific surface area can be controlled by adjusting, mainly, the methods for producing the precursors before the heat treatments, the compositional ratios of the metallic elements such as nickel and the like, the residual amount of the unreacted lithium carbonate that remains in the second precursor, and the heat treatment temperatures or heat treatment times of the second heat treatment step S32 and the third heat treatment step 33. In the chemical composition represented by the composition formula (1), when the element X is concentrated in the vicinities of the primary particle interfaces, and cation mixing is sufficiently reduced, an excellent positive electrode active material exhibiting a high discharge capacity and favorable charge/discharge cycle characteristics can be obtained.

The synthesized lithium transition metal complex oxide may be subjected to a cleansing step in which cleansing is performed with deionized water or the like, a drying step in which the cleansed lithium transition metal complex oxide is dried, or the like after the calcination step S30 for the purpose of the removal of an impurity or the like. In addition, the lithium transition metal complex oxide may be subjected to a crushing step in which the synthesized lithium transition metal complex oxide is crushed, a classification step in which the lithium transition metal complex oxide is classified to a predetermined particle size, or the like.

Particularly, when a large amount of lithium carbonate remains in the positive electrode active material obtained in the calcination step S30, for example, the amount of lithium carbonate is 0.2% by mass or more of the positive electrode active material, there is a concern that, in a blend coating step for producing a lithium ion secondary battery, a slurry-form electrode blend may gel, which makes the coating of the blend impossible. Therefore, it is preferable to add a water washing step and a drying step that are intended to remove a residual alkaline compound such as lithium carbonate subsequent to the calcination step S30. In the water washing step, there is a concern that not only the residual alkaline compound such as lithium carbonate but also lithium may be eluted from the particle surfaces in the lithium transition metal complex oxide. This is because trivalent nickel is unstable and thus comes into contact with moisture to turn into stable NiO, which consequently makes the elution of lithium easy. In the primary particles inside the secondary particles, when the X element is concentrated at a depth of 1 nm from the interfaces, the Ni rates in the vicinities of the primary particle surfaces relatively decrease, and thus it is possible to reduce the elution of lithium from the primary particle surfaces even when water permeates up to the primary particle interfaces during water washing.

In the water washing step, the lithium transition metal complex oxide obtained in the calcination step is washed with water. The lithium transition metal complex oxide can be washed with water by an appropriate method such as a method in which the lithium transition metal complex oxide is immersed in water or a method in which water is made to pass through the lithium transition metal complex oxide. When the lithium transition metal complex oxide is washed with water, it is possible to remove the residual alkaline component such as lithium carbonate or lithium hydroxide that remains on the surface of the lithium transition metal complex oxide or in the vicinity of the surface layer. The water in which the lithium transition metal complex oxide is immersed may be static water or may be stirred. As the water, it is possible to use deionized water, pure water such as distilled water, ultrapure water, or the like.

In the water washing step, in a case where the lithium transition metal complex oxide is immersed in water, the solid content of the lithium transition metal complex oxide to the water in which the lithium transition metal complex oxide is immersed is preferably set to 33% by mass or more and 77% by mass or less. When the solid content is 33% by mass or more, it is possible to suppress the amount of lithium being eluted from the lithium transition metal complex oxide into water to a small extent. Therefore, it is possible to obtain a positive electrode active material exhibiting a high discharge capacity and favorable rate. In addition, when the solid content is 77% by mass or less, since the powder can be uniformly washed with water, it is possible to reliably remove the impurity.

The time for washing the lithium transition metal complex oxide with water is preferably 20 minutes or shorter and more preferably 10 minutes or shorter. When the water washing time is 20 minutes or shorter, it is possible to suppress the amount of lithium being eluted from the lithium transition metal complex oxide into water to a small extent. Therefore, it is possible to obtain a positive electrode active material exhibiting a high discharge capacity and favorable rate.

The lithium transition metal complex oxide that has been immersed in water can be collected by an appropriate solid-liquid separation operation. Examples of a method for solid-liquid separation include reduced-pressure filtration, pressurization filtration, filter press, roller press, centrifugation, and the like. The moisture rate of the lithium transition metal complex oxide that has been solid-liquid separated from water is preferably set to 20% by mass or less and more preferably set to 10% by mass or less. When the moisture rate is low as described above, since there is no case where a large amount of a lithium compound that has been eluted into water is reprecipitated, it is possible to prevent the deterioration of the performance of the positive electrode active material. The moisture rate of the lithium transition metal complex oxide after the solid-liquid separation can be measured using, for example, an infrared moisture meter.

In the drying step, the lithium transition metal complex oxide washed with water in the water washing step is dried. When the lithium transition metal complex oxide is dried, moisture which reacts with the component of the electrolytic solution to deteriorate batteries or alters a binding agent to cause unsatisfactory coating is removed. In addition, with the water washing step and the drying step, the surface of the lithium transition metal complex oxide is modified, and thus it is possible to obtain an effect of improving the compressibility of the positive electrode active material as powder. As the method for drying, it is possible to use, for example, reduced-pressure drying, drying by heating, drying by reduced-pressure heating, or the like.
As the atmosphere in the drying step, an inert gas atmosphere containing no carbon dioxide or a reduced-pressure atmosphere having a high degree of vacuum is used. In such an atmosphere, the formation of a state in which lithium carbonate or lithium hydroxide enters the atmosphere due to a reaction with carbon dioxide or moisture in the atmosphere is prevented.

The drying temperature in the drying step is preferably 300°C or lower and more preferably 80°C or higher and 300°C or lower. When the drying temperature is 300°C or lower, since it is possible to suppress a side reaction and dry the lithium transition metal oxide, it is possible to avoid the deterioration of the performance of the positive electrode active material. In addition, when the drying temperature is 80°C or higher, it is possible to sufficiently remove moisture within a short period of time. The moisture rate of the lithium transition metal complex oxide after the drying is preferably 500 ppm or less, more preferably 300 ppm or less, and still more preferably 250 ppm or less. The moisture rate of the lithium transition metal complex oxide after the drying can be measured by the Karl Fischer's method.

In the drying step, two or more stages of drying treatments under different drying conditions are preferably performed. Specifically, the drying step preferably has a first drying step and a second drying step. When a plurality of stages of drying treatments as described above are performed, it is possible to avoid the alteration of the powder surface of the lithium transition metal complex oxide due to rapid drying. Therefore, it is possible to prevent the drying rate from being decreased by the alteration of the powder surface.

In the first drying step, the lithium transition metal complex oxide washed with water in the water washing step is dried at a drying temperature of 80°C or higher and 100°C or lower. In the first drying step, the majority of moisture present on the particle surfaces in the lithium transition metal complex oxide is removed mainly at a drying rate of a constant-rate drying period.

In the first drying step, when the drying temperature is 80°C or higher, it is possible to remove a large amount of moisture within a short period of time. In addition, when the drying temperature is 100°C or lower, it is possible to suppress the alteration of the powder surface of the lithium transition metal complex oxide, which is likely to be caused at high temperatures.

The drying time in the first drying step is preferably set to 10 hours or longer and 20 hours or shorter. When the drying time is within this range, it is possible to remove the majority of moisture present on the particle surfaces in the lithium transition metal complex oxide even at a relatively low drying temperature at which the alteration of the powder surface of the lithium transition metal complex oxide is suppressed.

In the second drying step, the lithium transition metal complex oxide dried in the first drying step is dried at a drying temperature of 190°C or higher and 300°C or lower. In the second drying step S42, moisture present in the vicinities of the particle surface layers in the lithium transition metal complex oxide is reduced while suppressing a side reaction deteriorating the performance of the positive electrode active material, and a lithium transition metal complex oxide dried to an appropriate moisture rate is obtained.
In the second drying step, when the drying temperature is 190°C or higher, it is possible to sufficiently remove moisture that has permeated the vicinities of the particle surface layers of the lithium transition metal complex oxide. In addition, when the drying temperature is 300°C or lower, it is possible to suppress a side reaction deteriorating the performance of the positive electrode active material and dry the lithium transition metal oxide.

The drying time in the second drying step is preferably set to 10 hours or longer and 20 hours or shorter. When the drying time is within this range, it is possible to suppress a side reaction deteriorating the performance of the positive electrode active material and dry the lithium transition metal complex oxide to a sufficiently low moisture rate.

### <Lithium ion secondary battery>

Next, a lithium ion secondary battery in which a positive electrode active material containing the above-described lithium transition metal complex oxide (positive electrode active material for lithium ion secondary battery) is used for a positive electrode will be described.

Fig. 2 is a partial cross-sectional view schematically showing an example of the lithium ion secondary battery.

As shown in Fig. 2, a lithium ion secondary battery 100 includes a bottomed cylindrical battery can 101 that accommodates a non-aqueous electrolytic solution, a wound electrode group 110 accommodated inside the battery can 101, and a disc-shaped battery lid 102 that seals the opening at the upper part of the battery can 101.

The battery can 101 and the battery lid 102 are formed of a metallic material, for example, stainless steel, aluminum, or the like. A positive electrode 111 includes a positive electrode collector 111a and a positive electrode blend layer 111b formed on the surface of the positive electrode collector 111a. In addition, a negative electrode 112 includes a negative electrode collector 112a and a negative electrode blend layer 112b formed on the surface of the negative electrode collector 112a.

The positive electrode collector 111a is formed of, for example, a metal foil of aluminum, an aluminum alloy, or the like, expanded metal, punching metal, or the like. The metal foil can be produced in a thickness of, for example, approximately 15 µm or more and 25 µm or less. The positive electrode blend layer 111b includes a positive electrode active material including the above-described lithium transition metal complex oxide. The positive electrode blend layer 111b is formed of a positive electrode blend in which, for example, the positive electrode active material, a conductive material, a binding agent, and the like are mixed together.

The negative electrode collector 112a is formed of a metal foil of copper, a copper alloy, nickel, or a nickel alloy, expanded metal, punching metal, or the like. The metal foil can be produced in a thickness of, for example, approximately 7 µm or more and 10 µm or less. The negative electrode blend layer 112b includes a lithium ion secondary battery negative electrode active material. The negative electrode blend layer 112b is formed of a negative electrode blend in which, for example, the negative electrode active material, a conductive material, a binding agent, and the like are mixed together.

As the negative electrode active material, it is possible to use an appropriate kind that is used in ordinary lithium ion secondary batteries. Specific examples of the negative electrode active material include negative electrode active materials obtained by treating an easily graphitized material obtained from natural graphite, petroleum coke, pitch coke, or the like at a high temperature of 2500°C or higher, mesophase carbon, amorphous carbon, negative electrode active materials obtained by coating the surface of graphite with amorphous carbon, carbon materials in which the crystallinity of the surface is degraded by mechanically treating the surface of natural graphite or artificial graphite, materials obtained by applying or adsorbing an organic substance such as a polymer to carbon surface, carbon fibers, metallic lithium, alloys of lithium and aluminum, tin, silicon, indium, gallium, magnesium, or the like, materials containing metal supported on the surfaces of silicon particles or carbon particles, oxides of tin, silicon, lithium, titanium, or the like, and the like. Examples of the metal supported include lithium, aluminum, tin, indium, gallium, magnesium, alloys thereof, and the like.

As the conductive material, it is possible to use an appropriate kind that is used in ordinary lithium ion secondary batteries. Specific examples of the conductive material include carbon particles of graphite, acetylene black, furnace black, thermal black, channel black or the like, a pitch-based carbon fiber, a polyacrylonitrile (PAN)-based carbon fiber, and other carbon fibers. One kind of conductive fiber may be used singly or a plurality of kinds of conductive fibers may be jointly used. The amount of the conductive material can be set to 3% by mass or more and 10% by mass or less of the entire blend.

As the binding agent, it is possible to use an appropriate kind that is used in ordinary lithium ion secondary batteries. Specific examples of the binding agent include polyvinylidene fluoride (PVDF), polytetrafluoroethylene, polyhexafluoropropylene, styrene-butadiene rubber, polyacrylonitrile, modified polyacrylonitrile, and the like. One kind of binding agent may be used singly or a plurality of kinds of binding agents may be jointly used. In addition, a thickenable binding agent such as carboxymethylcellulose may be jointly used. The amount of the binding agent can be set to, for example, 2% by mass or more and 10% by mass or less of the entire blend.

The positive electrode 111 or the negative electrode 112 can be manufactured according to an ordinary method for manufacturing a lithium ion secondary battery electrode. For example, it is possible to manufacture the positive electrode 111 or the negative electrode 112 with a blend preparation step of preparing an electrode blend by mixing an active material, a conductive material, a binding agent, and the like in a solvent, a blend coating step of forming an electrode blend layer by applying the prepared electrode blend onto a base material such as a collector and then drying the electrode blend, and a molding step of press-molding the electrode blend layer.

In the blend preparation step, as mixing means for mixing the materials, it is possible to use an appropriate mixing device, for example, a planetary mixer, a disper mixer, a rotation/revolution mixer, or the like. As the solvent, it is possible to use, for example, N-methylpyrrolidone, water, N,N-dimethylformamide, N,N-dimethylacetamide, methanol, ethanol, propanol, isopropanol, ethylene glycol, diethylene glycol, glycerin, dimethyl sulfoxide, tetrahydrofuran, or the like.

In the blend coating step, as means for applying the prepared slurry-form electrode blend, it is possible to use an appropriate application device, for example, a bar coater, a doctor blade, a roll transfer, or the like. As means for drying the applied electrode blend, it is possible to use an appropriate drying device, for example, a hot-air heating device, a radiation heating device, or the like.

In the molding step, as means for press-molding the electrode blend layer, it is possible to use an appropriate pressure device, for example, a roll press or the like. The positive electrode blend layer 111b can be produced in a thickness of, for example, approximately 100 µm or more and 300 µm or less. In addition, the negative electrode blend layer 112b can be produced in a thickness of, for example, approximately 20 µm or more and 150 µm or less. If necessary, the press-molded electrode blend layer is cut together with the positive electrode collector, whereby it is possible to produce a lithium ion secondary battery electrode having a desired shape.

As shown in Fig. 2, the wound electrode group 110 is formed by winding the band-shaped positive electrode 111 and the negative electrode 112 with a separator 113 sandwiched therebetween. The wound electrode group 110 is wound around a shaft center formed of, for example, polypropylene, polyphenylene sulfide, or the like and accommodated inside the battery can 101.

As the separator 113, it is possible to use a microporous film such as a polyolefin-based resin such as polyethylene, polypropylene, or a polyethylene-polypropylene copolymer, a polyamide resin, or an aramid resin, a film obtained by coating the surface of the above-described microporous film with a heat-resistant substance such as alumina particles.

As shown in Fig. 2, the positive electrode collector 111a is electrically connected to the battery lid 102 through a positive electrode lead piece 103. On the other hand, the negative electrode collector 112a is electrically connected to the bottom part of the battery can 101 through a negative electrode lead piece 104. Insulating plates 105 that prevent short-circuit are disposed between the wound electrode group 110 and the battery lid 102 and between the wound electrode group 110 and the bottom part of the battery can 101. The positive electrode lead piece 103 and the negative electrode lead piece 104 are formed of the same material as the positive electrode collector 111a or the negative electrode collector 112a, respectively, and joined to the positive electrode collector 111a and the negative electrode collector 112a, respectively, by spot welding, ultrasonic pressure welding, or the like.

A non-aqueous electrolytic solution is poured into the inside of the battery can 101. The method for pouring the non-aqueous electrolytic solution may be a method in which the non-aqueous electrolytic solution is directly poured with the battery lid 102 open, a method in which the non-aqueous electrolytic solution is poured into a pouring port provided in the battery lid 102 with the battery lid 102 closed, or the like. The battery can 101 is sealed by fixing the battery lid 102 thereto by swaging or the like. A seal material 106 made of an insulating resin material is provided between the battery can 101 and the battery lid 102, thereby electrically insulating the battery can 101 and the battery lid 102 from each other.

The non-aqueous electrolytic solution contains an electrolyte and a non-aqueous solvent. As the electrolyte, it is possible to use a variety of lithium salts, for example, LiPF₆, LiBF₄, LiClO₄, and the like. As the non-aqueous solvent, it is possible to use, for example, a chain-like carbonate such as dimethyl carbonate, diethyl carbonate, or ethyl methyl carbonate, a cyclic carbonate such as ethylene carbonate, propylene carbonate, or vinylene carbonate, a chain-like carboxylic acid ester such as methyl acetate, ethyl methyl carbonate, or methyl propyl carbonate, a cyclic carboxylic acid ester such as γ-butyrolactone or γ-valerolactone, an ether, or the like. The concentration of the electrolyte can be set to, for example, 0.6 M or higher and 1.8 M or lower.

To the non-aqueous electrolytic solution, a variety of additives can be added for the purpose of the suppression of the oxidation decomposition and reduction decomposition of the electrolytic solution, the prevention of the precipitation of a metallic element, improvement in the ion conductivity, improvement in the flame retardancy, or the like. Examples of the additives include organic phosphorus compounds such as trimethyl phosphate and trimethyl phosphite, organic sulfur compounds such as 1,3-propanesulton and 1,4-butansalton, carboxylic acid anhydrides such as polyadipic anhydride and hexahydrophthalic anhydride, boron compounds such as trimethyl borate and lithium bisoxalate borate, and the like.

The lithium ion secondary battery 100 having the above-described configuration is capable of storing electric power supplied from the outside in the wound electrode group 110 using the battery lid 102 as a positive electrode external terminal and the bottom part of the battery can 101 as a negative electrode external terminal. In addition, the lithium ion secondary battery 100 is capable of supplying the electric power stored in the wound electrode group 110 to external devices or the like. The lithium ion secondary battery 100 has a cylindrical form, but the shape or battery structure of the lithium ion secondary battery is not particularly limited, and the lithium ion secondary battery may have an appropriate shape, for example, a square form, a button form, a laminated sheet form, or the like or a different battery structure.

The lithium ion secondary battery according to the present embodiment can be used for a variety of uses. Examples of the uses include small electric power sources for mobile electronics, domestic electric equipment, and the like, stationary power sources for electric power storage devices, uninterruptible power source devices, electric power smoothing devices, and the like, driving power sources for ships, railway vehicles, hybrid railway vehicles, hybrid cars, electric cars, and the like, and the like, but the uses are not limited thereto. The above-described lithium transition metal complex oxide has a high nickel content, exhibits a high discharge capacity, and additionally, has a high open-circuit voltage and favorable output characteristics and thus can be particularly preferably used for in-vehicle uses requiring a high output at a low SOC and the like.

The chemical composition of a positive electrode active material that is used in a lithium ion secondary battery can be confirmed by disassembling the battery to collect the positive electrode active material that configures the positive electrode and performing inductively coupled plasma-optical emission spectrometry, an atomic absorption analysis, or the like. Since the compositional ratio of lithium (1+a in the composition formula (1)) depends on the charge state, it is also possible to determine the chemical composition of the positive electrode active material based on whether or not the coefficient a of lithium satisfies 0.99≤a≤0.

### Examples

Hereinafter, the present invention will be specifically described by showing examples, but the technical scope of the present invention is not limited thereto.

Positive electrode active materials according to the examples of the present invention were synthesized, and element distributions, X-ray diffraction profiles, discharge capacities, discharge rate characteristics, and charge/discharge cycle characteristics (capacity retention rate) were evaluated. In addition, positive electrode active materials according to comparative examples with different chemical compositions were synthesized for comparison with the examples and evaluated in the same manner.

### [Example 1]

First, as raw materials, lithium carbonate, nickel hydroxide, cobalt carbonate, manganese carbonate, and titanium oxide were prepared, the respective raw materials were weighed such that the mole ratios of metallic elements (Li:Ni:Co:Mn:Ti) reached 1.03:0.80:0.15:0.04:0.01, and pure water was added thereto such that the solid content reached 40% by mass. In addition, the raw materials were ground in a wet manner (mixed together in a wet manner) to prepare a raw material slurry such that the average particle diameter reaches less than 0.2 µm (mixing step S10).

Subsequently, the obtained raw material slurry was sprayed and dried with a nozzle-type spray dryer (manufactured by Ohkawara Kakohki Co., Ltd., ODL-20 type) to obtain a granulated substance having an average particle diameter of 3 µm or more and 50 µm or less (granulation step S20). The spray pressure was 0.13 MPa, and the amount of the slurry sprayed was 260 g/min. In addition, the dried granulated substance was heat treated to calcinate a lithium transition metal complex oxide (calcination step S30). Specifically, the granulated substance was heat treated in a continuous transfer furnace under the atmospheric atmosphere at 400°C for five hours to obtain a first precursor (first heat treatment step S31). In addition, the first precursor was heat treated in a calcination furnace substituted into an oxygen gas atmosphere under an oxygen stream at 700°C for six hours to obtain a second precursor (second heat treatment step S32). After that, the second precursor was heat treated (main calcination) in a calcination furnace substituted into an oxygen gas atmosphere under an oxygen stream at 800°C for 10 hours to obtain a lithium transition metal complex oxide (third heat treatment step S33). Calcinated powder obtained by the calcination was classified using a sieve having a mesh size of 53 µm, and the powder under the sieve was used as a positive electrode active material of a specimen.

### [Example 2]

A positive electrode active material was obtained in the same manner as in Example 1 except that, as a raw material, aluminum oxide was added instead of manganese carbonate and the raw materials were weighed such that the mole fractions of the raw materials (Li:Ni:Co:Al:Ti) reached 1.03:0.80:0.15:0.04:0.01.

### [Example 3]

A positive electrode active material was obtained in the same manner as in Example 1 except that the raw materials were weighed such that the mole fractions of the raw materials (Li:Ni:Co:Mn:Ti) reached 1.04:0.80:0.05:0.14:0.01 and the main calcination temperature was set to 860°C.

### [Example 4]

A positive electrode active material was obtained in the same manner as in Example 1 except that the raw materials were weighed such that the mole fractions of the raw materials (Li:Ni:Co:Mn:Ti) reached 0.97:0.80:0.05:0.14:0.01 and the main calcination temperature was set to 860°C.

### [Example 5]

A positive electrode active material was obtained in the same manner as in Example 1 except that the raw materials were weighed such that the mole fractions of the raw materials (Li:Ni:Co:Mn:Ti) reached 1.03:0.90:0.03:0.05:0.02 and the main calcination temperature was set to 840°C.

### [Example 6]

A positive electrode active material was obtained in the same manner as in Example 1 except that, as a raw material, aluminum oxide was added instead of manganese carbonate, the raw materials were weighed such that the mole fractions of the raw materials (Li:Ni:Co:Al:Ti) reached 1.03:0.90:0.03:0.05:0.02, and the main calcination temperature was set to 840°C.

### [Example 7]

A positive electrode active material was obtained in the same manner as in Example 1 except that cobalt carbonate was not used as a raw material, the raw materials were weighed such that the mole fractions of the raw materials (Li:Ni:Mn:Ti) reached 1.03:0.90:0.08:0.02 and the main calcination temperature was set to 840°C.

### [Example 8]

A positive electrode active material was obtained in the same manner as in Example 1 except that the raw materials were weighed such that the mole fractions of the raw materials (Li:Ni:Co:Mn:Ti) reached 1.03:0.94:0.02:0.01:0.03 and the main calcination temperature was set to 830°C.

### [Example 9]

A positive electrode active material was obtained in the same manner as in Example 1 except that, as a raw material, gallium oxide was added instead of titanium carbonate, the raw materials were weighed such that the mole fractions of the raw materials (Li:Ni:Co:Mn:Ga) reached 1.03:0.90:0.03:0.05:0.02, and the main calcination temperature was set to 840°C.

### [Example 10]

A positive electrode active material was obtained in the same manner as in Example 1 except that, as a raw material, magnesium oxide was added instead of titanium carbonate, the raw materials were weighed such that the mole fractions of the raw materials (Li:Ni:Co:Mn:Mg) reached 1.03:0.90:0.03:0.05:0.02, and the main calcination temperature was set to 840°C.

### [Example 11]

A positive electrode active material was obtained in the same manner as in Example 1 except that, as a raw material, zirconium oxide was added instead of titanium carbonate, the raw materials were weighed such that the mole fractions of the raw materials (Li:Ni:Co:Mn:Zr) reached 1.03:0.90:0.03:0.05:0.02, and the main calcination temperature was set to 840°C.

### [Example 12]

A positive electrode active material was obtained in the same manner as in Example 1 except that, as a raw material, zinc oxide was added instead of titanium carbonate, the raw materials were weighed such that the mole fractions of the raw materials (Li:Ni:Co:Mn:Zn) reached 1.03:0.90:0.03:0.05:0.02, and the main calcination temperature was set to 840°C.

### [Example 13]

A positive electrode active material was obtained in the same manner as in Example 1 except that the raw materials were weighed such that the mole fractions of the raw materials (Li:Ni:Co:Mn:Ti) reached 1.03:0.90:0.03:0.02:0.05 and the main calcination temperature was set to 830°C.

### [Example 14]

A positive electrode active material was obtained in the same manner as in Example 1 except that, as a raw material, aluminum oxide was added, the mole fractions of the raw materials (Li:Ni:Co:Mn:Al:Ti) was changed to 1.03:0.90:0.03:0.03:0.02:0.02, and the main calcination temperature was set to 840°C.

### [Example 15]

A positive electrode active material was obtained in the same manner as in Example 5 except that the time of the main calcination was changed to four hours.

### [Comparative Example 1]

In Comparative Example 1, the amount of Ti was increased, and the temperature of the main calcination was decreased. A positive electrode active material was obtained in the same manner as in Example 1 except that the raw materials were weighed such that the mole fractions (Li:Ni:Co:Mn:Ti) reached 1.03:0.80:0.10:0.02:0.08 and the main calcination temperature was set to 780°C.

### [Comparative Example 2]

In Comparative Example 2, as the raw material, titanium oxide was excluded, and Ti was saved. A positive electrode active material was obtained in the same manner as in Example 1 except that the raw materials were weighed such that the mole fractions (Li:Ni:Co:Mn) reached 1.03:0.90:0.03:0.07 and the main calcination temperature was changed to 840°C.

### [Comparative Example 3]

In Comparative Example 3, a precursor was produced not by a solid-phase reaction but by a coprecipitation method. First, as raw materials, nickel sulfate, cobalt sulfate, aluminum sulfate, and titanium sulfate were used, the respective raw materials were weighed such that the mole fractions (Ni:Co:Al:Ti) reached 0.90:0.03:0.05:0.02, and the raw materials were dissolved in pure water to adjust a solution mixture. A part of the hydrosulfate solution mixture was heated to 50°C, and ammonia water was added dropwise under stirring as a complexing agent such that the pH reached 7.0. Furthermore, the hydrosulfate solution mixture and a sodium carbonate aqueous solution were added dropwise to coprecipitate a complex carbonate of Ni, Co, Al, and Ti. At this time, ammonia water was added dropwise such that the pH was maintained at 7.0. The deposited complex carbonate was suction-filtered, washed with water, and dried at 120°C. Next, as a raw material, lithium carbonate was used, and the raw materials were weighed such that the mole fractions (Li:Ni:Co:Al:Ti) reached 1.03:0.90:0.03:0.05:0.02 and mixed together with a ball mill. After that, the mixture was heat treated in a continuous transfer furnace under the atmospheric atmosphere at 400°C for two hours. A positive electrode active material was produced in the same manner as in Example 1 in the second heat treatment step and thereafter.

### (Measurement of chemical compositions and specific surface areas of positive electrode active materials)

The chemical compositions of the synthesized positive electrode active materials were analyzed by inductively coupled plasma-optical emission spectrometry using an ICP-AES optical emission spectrometer "OPTIMA8300" (manufactured by PerkinElmer Co., Ltd.). In addition, the amounts of oxygen in the positive electrode active materials (a in the composition formula (1)) were analyzed by inert gas fusion - infrared absorption spectrometry. As a result, the positive electrode active materials according to Examples 1 to 15 and the positive electrode active materials according to Comparative Examples 1 to 3 all had the chemical compositions as shown in Table 1 except only the amounts of lithium prepared. In addition, the specific surface areas of the positive electrode active materials were obtained by the BET method using an automatic specific surface area measuring instrument "BELCAP" (manufactured by MicrotracBEL Corp.). The results are shown in Table 1.

### (Element concentration distributions)

The concentration distributions of the element X in the synthesized positive electrode active materials were measured in the following order. First, the powder of the produced positive electrode active material was made into a thin piece by an FIB process using a focused ion and/electron beam process observation device "nanoDUET NB5000" (manufactured by Hitachi High-Tech Corporation) under conditions of an accelerating voltage of 30 kV (sampling) and 10 kV (finishing). Next, the powder was observed using a scanning transmission electron microscope (STEM) "JEM-ARM200F" (manufactured by JEOL, Ltd.) to specify primary particle interfaces inside the secondary particles. In addition, EELS spectra were measured from the vicinities of the interfaces of the primary particles to a depth of 50 nm in the direction toward the central parts of the primary particles using an energy filter "GIF-Quantun" (Gatan, Inc.) to obtain the concentration distribution of each element containing X. Furthermore, the concentrations D0 of X at the primary particle interfaces inside the secondary particles, the concentrations D1 of X at a depth of 1 nm from the interfaces, and the concentrations D2 of X at the central parts of the primary particles were measured using an energy-dispersive X-ray analyzer "JED-2300T" (manufactured by JEOL, Ltd.). The measurement was performed at three places, and the average value was used. As a result, it was confirmed that the positive electrode active materials according to Examples 1 to 15 and the positive electrode active materials according to Comparative Examples 1 to 4 all had D1, D2, and D0 shown in Table 1.

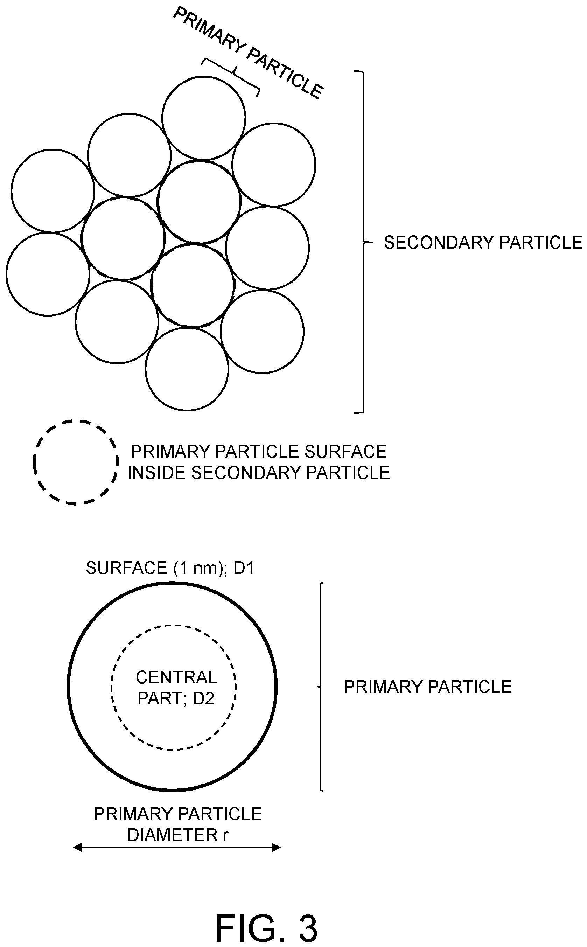

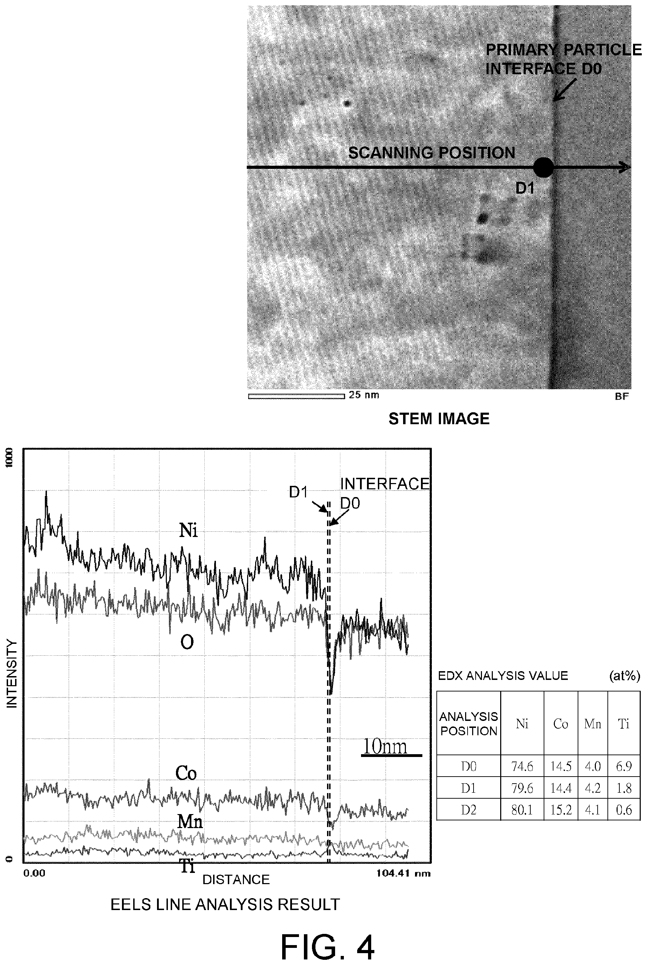

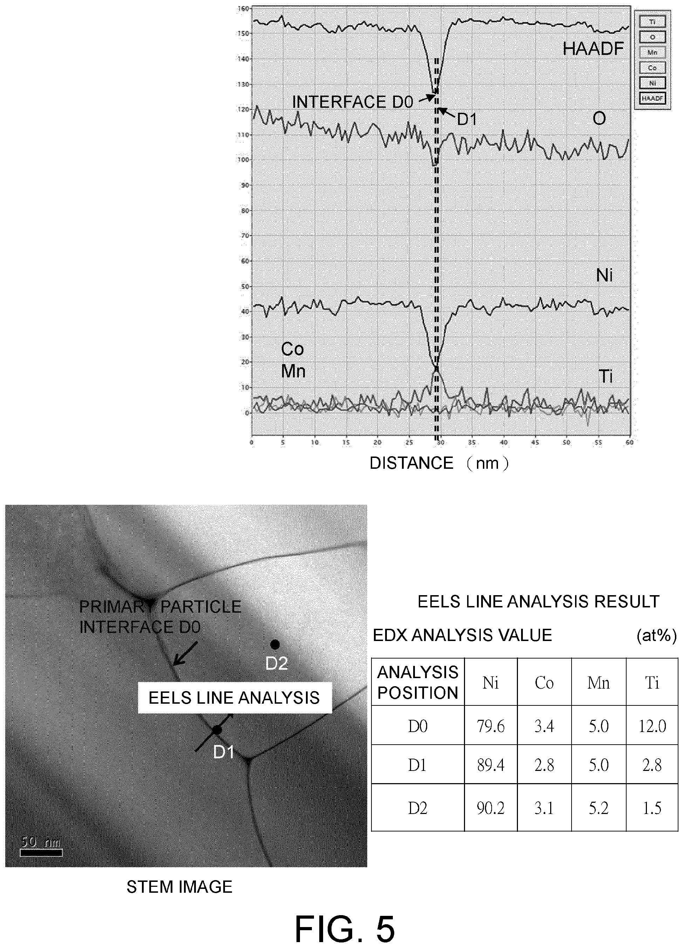

Fig. 3(a) schematically shows an example of a secondary particle of the positive electrode active material for lithium ion secondary battery, and Fig. 3(b) schematically shows an example of a primary particle. As shown in Fig. 3(a), the positive electrode active material includes the secondary particle formed by the aggregation of a plurality of primary particles, and, even inside the secondary particle, primary particle surfaces are present. The surfaces of primary particles adjacent to each other are in contact with each other to form an interface (refer to Fig. 4 and Fig. 5). As shown in Fig. 3(b), the atomic concentration D1 is measured at a depth position of 1 nm from the interface (surface) of each primary particle, and the atomic concentration D2 is measured at a depth of 0.2r or more from the surface. Since the concentrations are measured based on an interface at the time of a line analysis described below, the positions are specified with depths from the interface, which are used as a terminology matching actual cases. Substantially, the interface and the surface are synonyms, and, in the present specification, "the interface of the primary particle" may also be mentioned as "the surface of the primary particle".

Fig. 4 shows a STEM image of primary particles inside a secondary particle in Example 1, a line analysis of the concentration of each element by STEM-EELS, and the concentrations of each element by an EDX analysis at D1, D2, and D0. In Fig. 4, D2 is present outside the range of the STEM image due to the scale and is not shown. From the EDX analysis values, it was possible to confirm that, in the case of Ti, with respect to e=0.01, the concentrations were 1.8 at D1 and 0.6 at D2 and satisfied D1>(100 × e)>D2>(100 × e/4). In addition, Ti was concentrated three times at D1 compared with D2. Furthermore, from the EELS line analysis, it was possible to confirm that Ti was concentrated up to a depth of approximately 3 nm from the interface. The concentration difference of each element between D1 and D2 was 1.2 at% for Ti, 0.5 at% for Ni, 0.8 at% for Co, and 0.1 at% for Mn. A significant concentration different appears for Ti, but the concentration differences for Ni, Co, and Mn are 1.0 at% or less, which are smaller than the concentration difference for Ti. In addition, it was possible to confirm that D0 was 6.9 and D0>D1>D2 was satisfied.

Fig. 5 shows a STEM image of primary particles inside a secondary particle in Example 5, a line analysis of the concentration of each element by STEM-EELS, and the concentrations of each element by an EDX analysis at D1, D2, and D0. From the EDX analysis values, it was possible to confirm that, in the case of Ti, with respect to e=0.02, the concentrations were 2.8 at D1 and 1.5 at D2 and satisfied D1>(100 × e)>D2>(100 × e/4). In addition, Ti was concentrated approximately 1.9 times at D1 compared with D2. Furthermore, from the EELS line analysis, it was possible to confirm that Ti was concentrated up to a depth of approximately 2 nm from the interface. The concentration difference of each element between D1 and D2 was 1.3 at% for Ti, 0.8 at% for Ni, 0.3 at% for Co, and 0.2 at% for Mn. Even here, it was confirmed that the Ti concentration became high on the primary particle surface. In addition, it was confirmed that, regarding the distributions of Ni, Co, and Mn, compared with Ti, the concentration differences between D1 and D2 were smaller than that of Ti. In addition, it was possible to confirm that D0 was 12.0 and D0>D1>D2 was satisfied.

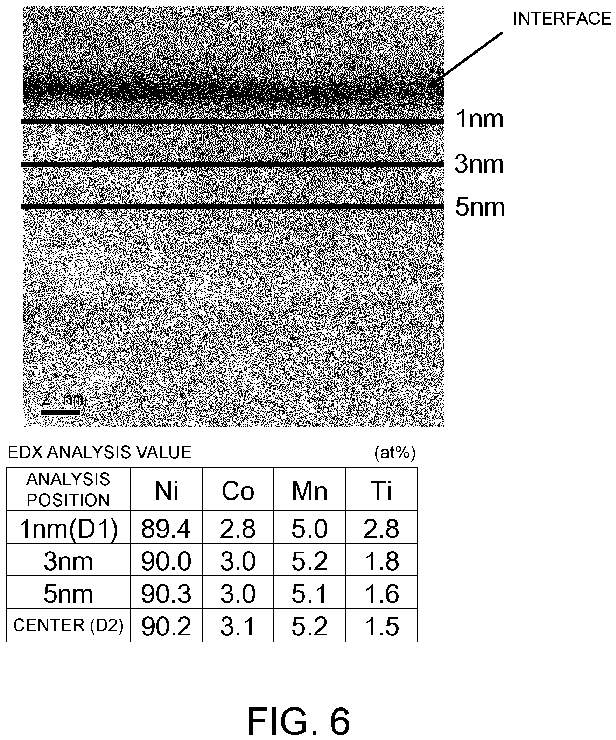

Fig. 6 shows a STEM image of a primary particle inside a secondary particle in Example 5 and the concentration of each element by STEM-EDX. It was possible to confirm that, as the depth increased to 1 nm, 3 nm, and 5 nm from the interface, the Ti concentration decreased. It was possible to confirmed that, compared with the center, Ti was concentrated approximately 1.9 times at 1 nm, 1.2 times at 3 nm, and approximately 1.1 times at 5 nm, and Ti was concentrated 1.5 times or more at thicknesses of less than 3 nm from the interface compared with the center and was most concentrated at 1 nm or less.

### (Powder X-ray diffraction measurement)

The crystal structures of the synthesized positive electrode active materials were measured using a powder X-ray diffractometer "RINT-Ultima III" (manufactured by Rigaku Corporation) under the following conditions. First, the powder of the produced positive electrode active material was packed into the frame of a glass specimen plate, and the surfaces of the powder were flattened with the glass plate. In addition, an X-ray diffraction spectrum (profile) was measured under the conditions of radiation source: CuKa, tube voltage: 48 kV, tube current: 28 mA, scanning range: 15°≤2θ≤ 80°, scanning rate: 1.0 °/min, sampling intervals: 0.02 °/step, divergence slit (opening angle): 0.5°, scatter slit (opening angle): 0.5°, receiving slit (opening angle): 0.15 mm. As a result, it was confirmed that the positive electrode active materials according to Examples 1 to 15 and the positive electrode active materials according to Comparative Examples 1 to 3 all belonged to hexagonal crystal.

Furthermore, the cation mixing rate of nickel with respect to lithium sites in the crystal structure (the site occupancy of nickel in 3a sites) was measured using Rietveld analysis software "Rietan-FP" and the chemical composition and the X-ray diffraction spectrum of the positive electrode active material. The positive electrode active materials were assumed to have an α-NaFeO₂ type crystal structure, and an attempt was made to make the crystal structures precise under the assumption that, in the crystal structure belonging to the space group R3-m, 3a sites were occupied by Li or Ni, 3b sites were occupied by Co, Mn, M, or residual Li or Ni, and 6c sites were occupied by O, respectively. In addition, the cation mixing rate (the site occupancy of nickel in 3a sites) was obtained by calculating the percentage of 3a site occupied by nickel in all of the 3a sites. These results are shown in Table 1.

### (Discharge capacity, rate characteristics, and charge/discharge cycle characteristics (capacity retention rate))

Lithium ion secondary batteries in which the synthesized positive electrode active materials were used as the material of the positive electrodes, respectively, were produced, and the discharge capacities, charge rate characteristics, and capacity retention rates of the lithium ion secondary batteries were obtained. First, the produced positive electrode active material, a carbon-based conductive material, and a binding agent dissolved in advance in N-methyl-2-pyrrolidone (NMP) were mixed together such that the mass fractions reached 94:4.5:1.5. In addition, a uniformly mixed positive electrode blend slurry was applied onto a positive electrode collector that was a 20 µm-thick aluminum foil such that the amount of the slurry applied reached 10 mg/cm². Next, the positive electrode blend slurry applied to the positive electrode collector was heat treated at 120°C, and the solvent was distilled away, thereby forming a positive electrode blend layer. After that, the positive electrode blend layer was press-molded by hot press, punched out in a circular shape having a diameter of 15 mm, and used as the positive electrode.

Subsequently, a lithium ion secondary battery was produced using the produced positive electrode, a negative electrode, and a separator. As the negative electrode, metallic lithium punched out in a circular shape having a diameter of 16 mm was used. As the separator, a 30 µm-thick polypropylene porous separator was used. The positive electrode and the negative electrode were made to face each other across the separator in a non-aqueous electrolytic solution, and the lithium ion secondary battery was assembled. As a non-aqueous electrolytic solution, used was a solution obtained by dissolving LiPF₆ in a solvent in which ethylene carbonate and dimethyl carbonate were mixed together such that the volume ratio reached 3:7 to a concentration of 1.0 mol/L.

The produced lithium ion secondary battery was charged in an environment of 25°C with a constant current of 40 A/kg based on the weight of the positive electrode blend and a constant voltage of 4.3 V as the upper limit potential. In addition, the lithium ion secondary battery was discharged up to a lower limit potential of 2.5 V at a constant current of 40 A/kg based on the weight of the positive electrode blend, and the discharge capacity (initial capacity) was measured.

Subsequently, the lithium secondary battery, from which the initial capacity had been measured, was charged in an environment of 25°C with a constant current of 40 or 600 A/kg based on the weight of the positive electrode blend to an upper limit potential of 4.3 V, and the ratio of the charge capacity at 600 A/kg to the charge capacity at 40 A/kg was calculated as the charge rate characteristics.

Next, in an environment of 25°C, the lithium ion secondary battery was charged with a constant current of 100 A/kg based on the weight of the positive electrode blend and a constant voltage of 4.3 V as the upper limit potential. In addition, the lithium ion secondary battery was discharged to a lower limit potential of 2.5 V at a constant current of 100 A/kg based on the weight of the positive electrode blend in one cycle. The above-described cycle was performed a total of 100 times, and the discharge capacity after the 100^{th} cycle was measured. The ratio of the discharge capacity after the 100^{th} cycle to the initial capacity was calculated as the capacity retention rate. The results are shown in Table 1.

**[Table 1]**

| | Chemical composition (measurement value) Li₁₊ₐNi_{b}Co_{c}M_{d}XₑO_{2+α} | | | | | | | | | | D0 [at%] | D1 [at%] | D2 [at%] | Specific surface area [m²/g] | Cation mixing rate [%] | Discharge capacity [Ah/hg] | Rate characteristics [%] 3C/0.2C | 100 cycle capacity retention rate [%] |
|---|---|---|---|---|---|---|---|---|---|---|---|---|---|---|---|---|---|---|
| | Li (1+a) | Ni (b) | Co (c) | Mn | Al | Ti | Ga | Mg | Zr | Zn | | | | | | | | |
| | | | | (d) | | (e) | | | | | | | | | | | | |
| Example 1 | 1.02 | 0.80 | 0.15 | 0.04 | - | 0.01 | - | - | - | - | 6.9 | 1.8 | 06 | 061 | 1.84 | 193 | 88.5 | 96 |
| Example 2 | 1.02 | 0.80 | 0.15 | - | 0.04 | 0.01 | - | - | - | - | - | 1.6 | 07 | 0.45 | - | 190 | 89.5 | 96 |
| Example 3 | 1.04 | 0.80 | 0.05 | 0.14 | - | 0.01 | - | - | - | - | - | 1.4 | 07 | 0.72 | 3.33 | 191 | 88.0 | 92 |
| Example 4 | 0.96 | 0.80 | 0.05 | 0.14 | - | 0.01 | - | - | - | - | - | 1.9 | 06 | 0.88 | - | 186 | 87.4 | 91 |
| Example 5 | 1.02 | 0.90 | 0.03 | 0.05 | - | 002 | - | - | - | - | 12.0 | 2.8 | 1.5 | 0.30 | 2.09 | 200 | 90.0 | 94 |
| Example 6 | 1.02 | 0.90 | 0.03 | - | 0.05 | 002 | - | - | - | - | - | 2.7 | 1.4 | 0.22 | - | 196 | 90.6 | 94 |
| Example 7 | 1.02 | 0.90 | - | 0.08 | - | 002 | - | - | - | - | - | 3.1 | 1.3 | 0.36 | - | 200 | 89.5 | 94 |
| Example 8 | 1.02 | 0.94 | 002 | 0.01 | - | 0.03 | - | - | - | - | - | 3.8 | 2.0 | 0.26 | - | 205 | 88.8 | 96 |
| Example 9 | 1.02 | 0.90 | 0.03 | 0.05 | - | - | 002 | - | - | - | - | 2.6 | 1.6 | 0.45 | - | 194 | 892 | 92 |
| Example 10 | 1.02 | 0.90 | 0.03 | 0.05 | - | - | - | 002 | - | - | - | 2.9 | 1.4 | 0.24 | - | 192 | 90.7 | 94 |
| Example 11 | 1.02 | 0.90 | 0.03 | 0.05 | - | - | - | - | 002 | - | - | 3.1 | 1.2 | 041 | 3.66 | 196 | 90.5 | 94 |
| Example 12 | 1.02 | 0.90 | 0.03 | 0.05 | - | - | - | - | - | 002 | - | 2.9 | 1.3 | 0.27 | - | 193 | 89.0 | 91 |
| Example 13 | 1.02 | 0.90 | 0.03 | 002 | - | 0.05 | - | - | - | - | - | 6.0 | 2.3 | 0.50 | - | 190 | 88.1 | 97 |
| Example 14 | 1.02 | 0.90 | 0.03 | 0.03 | 002 | 002 | - | - | - | - | 12.9 | 3.3 | 1.3 | 0.26 | - | 199 | 90.3 | 94 |
| Example 15 | 1.02 | 0.90 | 0.03 | 0.05 | - | 002 | - | - | - | - | - | 3.6 | 1.3 | 0.19 | 2.57 | 195 | 88.4 | 90 |
| Comparative Example 1 | 1.02 | 0.80 | 0.10 | 002 | - | 0.08 | - | - | - | - | - | 10.1 | 4.5 | 0.44 | 4.63 | 158 | 73.8 | 95 |
| Comparative Example 2 | 1.02 | 0.90 | 0.03 | 0.07 | - | - | - | - | - | - | - | - | - | 0.33 | - | 200 | 84.0 | 76 |
| Comparative Example 3 | 1.02 | 0.90 | 0.03 | - | 0.05 | 002 | - | - | - | - | - | 1.8 | 2.1 | 0.28 | 4.17 | 183 | 82.9 | 77 |

As shown in Table 1, in Examples 1 to 15, the chemical composition represented by the composition formula (1) was satisfied, particularly, in compositions where the coefficient c of Co was 0≤c≤0.06, D1>D2 and D1>(100 × e)>D2>(100 × e/4) were satisfied, and furthermore, D1/D2 was 1.5 or more. In addition, it was confirmed that D0>D1>D2 was satisfied. As a result, high discharge capacities exceeding approximately 190 Ah/kg were obtained, and the charge rate characteristics were also as favorable as 87% or more. In addition, it was possible to confirm that the capacity retention rates also exhibited 90% or more and the lifetime characteristics were excellent. In addition, it was confirmed that the cation mixing rates became as low numerical values as less than 4%.

In Comparative Example 1, the amount of titanium oxide prepared was large, and it was not possible to satisfy the composition formula (1). Since the cation mixing amount was also large, it was not possible to obtain a high discharge capacity. Furthermore, the charge rate characteristics were low, and a likelihood of the intercalation and deintercalation of Li ions being impaired by Ti concentration was shown. From this fact, it is thought that excessive concentration is not preferable and the upper limit value of the atomic concentration D1 of X is 10 at% or less.

In addition, in Comparative Example 2, since titanium oxide is zero, no concentrated layer was formed on the surfaces of the primary particles, and it was not possible to obtain favorable charge/discharge cycle characteristics.

In addition, in Comparative Example 3, since the precursor was produced using not a solid-phase method but a coprecipitation method, Ti was uniformly dispersed inside the secondary particles, and no concentrated layers were formed on the primary particle surfaces. As a result, it was not possible to obtain favorable charge/discharge cycle characteristics.

### [Reference Signs List]

- 100: Lithium ion secondary battery
- 101: Battery can
- 102: Battery lid
- 103: Positive electrode lead piece
- 104: Negative electrode lead piece
- 105: Insulating plate
- 106: Seal material
- 110: Wound electrode group
- 111: Positive electrode
- 111a: Positive electrode collector
- 111b: Positive electrode blend layer
- 112: Negative electrode
- 112a: Negative electrode collector
- 112b: Negative electrode blend layer
- 113: Separator

## Claims

1. A positive electrode active material for lithium ion secondary battery comprising:
a lithium transition metal complex oxide represented by a composition formula shown below (1):
Li₁₊ₐNi_{b}Co_{c}M_{d}XₑO_{2+α} ··· (1)
[here, in the composition formula (1), M represents at least one selected from Al and Mn, X represents at least one metallic element other than Li, Ni, Co, Al, and Mn, and a, b, c, d, e, and α are numbers satisfying -0.04≤a≤0.08, 0.80≤b<1.0, 0≤c<0.2, 0≤d<0.2, 0<e<0.08, b+c+d+e=1, and -0.2<α<0.2],
wherein the positive electrode active material comprises secondary particles formed by aggregation of a plurality of primary particles, and
in the primary particles present inside the secondary particles, an atomic concentration D1 of X at a depth of 1 nm from an interface between the primary particles and an atomic concentration D2 of X at a central part of the primary particle satisfy D1>D2.

2. The positive electrode active material for lithium ion secondary battery according to claim 1,
wherein a coefficient c of Co is 0≤c≤0.06.

3. The positive electrode active material for lithium ion secondary battery according to claim 1 or 2,
wherein D1>(100 x e)>D2>(100 x e/4) is satisfied.

4. The positive electrode active material for lithium ion secondary battery according to any one of claims 1 to 3,
wherein D1 is 1.5 times or more D2.

5. The positive electrode active material for lithium ion secondary battery according to any one of claims 1 to 4,
wherein, when an atomic concentration of X at an interface between primary particles adjacent to each other inside the secondary particle is represented by D0, a relationship of D0>D1>D2 is satisfied.

6. The positive electrode active material for lithium ion secondary battery according to any one of claims 1 to 5,
wherein the X is at least one element selected from a group consisting of Ti, Ga, Mg, Zr, and Zn.

7. The positive electrode active material for lithium ion secondary battery according to any one of claims 1 to 6,
wherein, in the primary particle, a concentration difference between an atomic concentration of each of Ni and Co at a depth of 1 nm from an interface and an atomic concentration of each of Ni and Co at a central part of the primary particle is smaller than a concentration difference between the atomic concentration D1 and the atomic concentration D2 of X.

8. A lithium ion secondary battery comprising:
a positive electrode containing the positive electrode active material for lithium ion secondary battery according to any one of claims 1 to 7.

9. A method for manufacturing a positive electrode active material for lithium ion secondary battery containing a lithium transition metal complex oxide represented by a composition formula shown below (1);
Li₁₊ₐNi_{b}Co_{c}M_{d}XₑO_{2+α} ··· (1)
[here, in the composition formula (1), M represents at least one selected from Al and Mn, X represents at least one metallic element other than Li, Ni, Co, Al, and Mn, and a, b, c, d, e, and α are numbers satisfying -0.04≤a≤0.08, 0.80≤b<1.0, 0≤c<0.2, 0≤d<0.2, 0<e<0.08, b+c+d+e=1, and -0.2<α<0.2],
the method comprising:
a mixing step of mixing compounds containing metallic elements comprising Li, Ni, Co, M, and X in the composition formula (1) and a dispersant;
a granulation step of obtaining a granulated substance from a slurry obtained through the mixing step; and
a calcination step of obtaining a lithium transition metal complex oxide represented by the composition formula (1) by calcining the granulated substance,
wherein the positive electrode active material for lithium ion secondary battery containing the lithium transition metal complex oxide comprises secondary particles formed by aggregation of a plurality of primary particles, and, in the primary particles present inside the secondary particles, an atomic concentration D1 of X at a depth of 1 nm from an interface between the primary particles and an atomic concentration D2 of X at a central part of the primary particle satisfy D1>D2.

10. The method for manufacturing a positive electrode active material for lithium ion secondary battery according to claim 9,
wherein an average grain size of the compound contained in the slurry is set to 0.1 µm or more and 0.3 µm or less,
an average particle diameter of secondary particles in the granulated substance is set to 5 µm or more and 20 µm or less,
the calcination step comprises:
a first heat treatment step of heat treating the granulated substance at a heat treatment temperature of 200°C or higher and 500°C or lower for 0.5 hours or longer and five hours or shorter to obtain a first precursor,
a second heat treatment step of heat treating the first precursor at a heat treatment temperature of 650°C or higher and lower than 750°C in an oxidative atmosphere for four hours or longer and 15 hours or shorter to obtain a second precursor, and
a third heat treatment step of heat treating the second precursor at a heat treatment temperature of 780°C or higher and 880°C or lower in an oxidative atmosphere having a lower CO₂ concentration than the atmosphere of the second heat treatment step for 0.5 hours or longer and 1.5 hours or shorter to obtain a third precursor.
